# EUROPEAN PATENT SPECIFICATION

(11) **EP 4 280 631 B1**
(45) Date of publication and mention of the grant of the patent: **25.02.2026**
(21) Application number: 22739143.0
(22) Date of filing: 14.01.2022
(51) Int. Cl.: H04W 4/06, H04W 76/40

(54) **METHOD, APPARATUS, AND DEVICE FOR CONFIGURING LOGICAL CHANNEL**
VERFAHREN, VORRICHTUNG UND VORRICHTUNG ZUR KONFIGURATION EINES LOGISCHEN KANALS
PROCÉDÉ, APPAREIL ET DISPOSITIF DE CONFIGURATION DE CANAL LOGIQUE

(30) Priority: 15.01.2021 CN 202110057653
(43) Date of publication of application: 22.11.2023
(73) Proprietor: Vivo Mobile Communication Co., Ltd., Dongguan, Guangdong 523863 (CN)
(72) Inventor: LIU, Jiamin, Dongguan, Guangdong 523863 (CN)
(74) Representative: Lavoix
(86) International application number: PCT/CN2022/072134
(87) International publication number: WO 2022/152268

(56) References cited:
- WO-A1-2017/086580
- CN-A- 109 286 467
- CN-A- 110 621 069
- CN-A- 111 901 766
- CN-A- 111 901 766
- CN-A- 112 087 720
- LENOVO ET AL: "Protocols and Dynamic Switching for 5G MBS PTP and PTM", vol. RAN WG2, no. Online; 20200817 - 20200828, 7 August 2020 (2020-08-07), XP051912204, Retrieved from the Internet <URL:https://ftp.3gpp.org/tsg_ran/WG2_RL2/TSGR2_111-e/Docs/R2-2007466.zip> [retrieved on 20200807]

## Description

### TECHNICAL FIELD

This application pertains to the field of communication technologies and specifically relates to a logical channel configuration method, user equipment, a network-side device, a readable storage medium and a computer program product.

### BACKGROUND

Broadcast and multicast transmissions in long term evolution (long term evolution, LTE) support transmission of multimedia broadcast multicast service (multimedia broadcast multicast service, MBMS) in a multicast/broadcast single frequency network (multicast broadcast single frequency network, MBSFN) mode and transmission of multicast service in a single cell point to multipoint (single cell point to multipoint, SC-PTM) mode. In the MBSFN mode, logical channel overlap is not a concern since the multicast service operates on transmission channels and transmission time domain locations that are entirely independent of unicast. For the SC-PTM mode, only one special logical channel identifier (logical channel identity, LCID) is assigned to the multicast service in LTE. This LCID can identify single cell-multicast control channels (single cell-multicast control channel, SC-MCCH) and single cell-multicast traffic channels (single cell-multicast traffic channel, SC-MTCH) to distinguish them from unicast service. Multiple SC-MCCHs and SC-MTCHs can be internally distinguished by group-radio network temporary identifiers (group-radio network temporary identifier, G-RNTI).

However, multicast transmission in new radio (new radio, NR) is more complex compared to LTE. In NR, one temporary mobile group identifier (temporary mobile group identifier, TMGI) service may correspond to multiple logical channels, and a multicast radio bearer (multicast radio bearer, MRB) in one TMGI may be configured with both PTM leg (leg) and point to point (point to point, PTP) leg, and proper configurations of the PTM leg and the PTP leg can ensure that multicast service and unicast service in NR are coordinated for their respective scheduling, thus ensuring the normal operation of multicast service. Therefore, how multicast service can be scheduled normally in NR is an urgent problem to be solved.
CN 111901766A discloses a bearer configuration method and device, a context information management method and device, a release method and device, equipment and a storage medium. Published document by LENOVO ET AL ("Protocols and Dynamic Switching for 5G MBS PTP and PTM", 3GPP DRAFT; R2-2007466, 3RD GENERATION PARTNERSHIP PROJECT (3GPP), MOBILE COMPETENCE CENTRE; 650, ROUTE DES LUCIOLES;F-06921 SOPHIA-ANTIPOLIS CEDEX; FRANCE vol. RAN WG2, no. Online; 20200817-20200828,7 August 2020 (2020-08-07), XP051912204) discloses the protocols design of 5G MBS in RRC_CONNECTED state and dynamic switching between PTP and PTM.

### SUMMARY

Embodiments of this application provide a logical channel configuration method, user equipment, a network-side device, a readable storage medium and a computer program product, as defined in the appended set of claims, so as to resolve a problem of how multicast service can be scheduled normally in NR.

In the embodiments of this application, UE obtains at least one piece of logical channel configuration information corresponding to a first TMGI, where one piece of logical channel configuration information indicates any one of the following configurations: a first configuration: PTM LCID and/or PTM RLC bearer configuration; and a second configuration: PTP LCID and/or PTP RLC bearer configuration. With this solution, UE can obtain logical channel configuration information of TMGIs. Therefore, when the UE is interested in one TMGI, the UE can obtain logical channel configuration information of this TMGI, such as a first configuration (PTM LCID and/or PTM RLC bearer configuration) and/or a second configuration (PTP LCID and/or PTP RLC bearer configuration). In this way, the UE can receive TMGI services according to the logical channel configuration information, so that the collaborative transmission efficiency between multicast and unicast services of the UE can be improved, thereby improving the transmission efficiency of the multicast service of the UE while ensuring system efficiency.

### BRIEF DESCRIPTION OF DRAWINGS

FIG. 1 is a block diagram of a wireless communication system according to an embodiment of this application;
FIG. 2 is a first schematic flowchart of a logical channel configuration method according to an embodiment of this application;
FIG. 3 is a second schematic flowchart of a logical channel configuration method according to an embodiment of this application;
FIG. 4 is a schematic diagram of a protocol stack architecture of UE according to an embodiment of this application;
FIG. 5 is a first schematic structural diagram of a logical channel configuration apparatus according to an illustrative embodiment of this application not in accordance with the appended claims;
FIG. 6 is a second schematic structural diagram of a logical channel configuration apparatus according to an illustrative embodiment of this application not in accordance with the appended claims;
FIG. 7 is a schematic diagram of hardware of a communication device according to an embodiment of this application;
FIG. 8 is a schematic diagram of hardware of UE according to an embodiment of this application; and
FIG. 9 is a schematic diagram of hardware of a network-side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. The scope of the invention is defined by the appended claims.

The terms "first", "second", and the like in this specification and claims of this application are used to distinguish between similar objects rather than to describe a specific order or sequence. It should be understood that data used in this way are interchangeable in appropriate circumstances such that the embodiments of this application can be implemented in an order other than those illustrated or described herein. In addition, "first" and "second" are typically used to distinguish objects of a same type and do not limit quantities of the objects. For example, there may be one or more first objects. In addition, in this specification and claims, "and/or" indicates at least one of the connected objects, and the character "/" generally indicates an "or" relationship between the contextually associated objects.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, a new radio (New Radio, NR) system is described for illustration purposes, and NR terms are used in most of the following descriptions, although these technologies may also be applied to other applications than the NR system application, for example, the 6th generation (6th Generation, 6G) communication system.

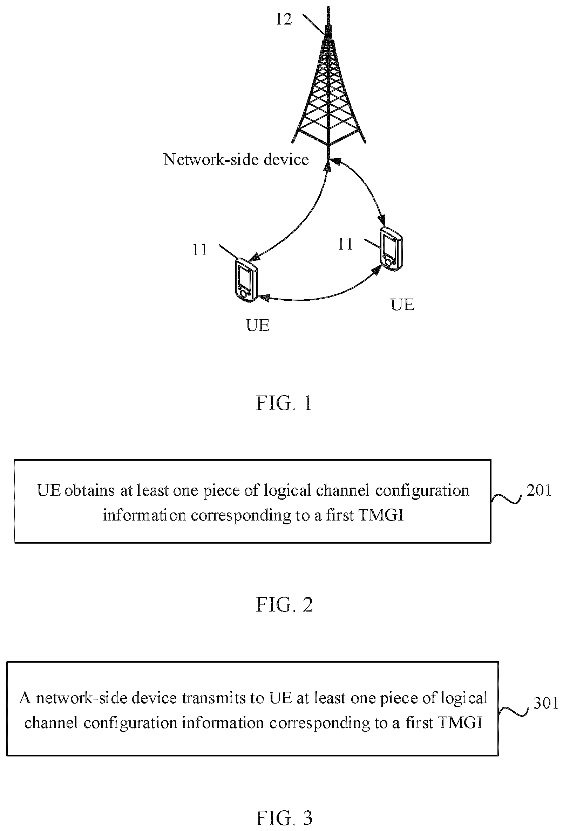

FIG. 1 is a block diagram of a wireless communication system to which the embodiments of this application are applicable. The wireless communication system includes UE 11 and a network-side device 12. The UE 11 may also be referred to as a terminal device or a terminal. The UE 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicular user equipment (VUE), or pedestrian user equipment (PUE). The wearable device includes a wristband, earphones, glasses, or the like. It should be noted that the UE 11 is not limited to any specific type in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN access point, a Wi-Fi node, a transmitting receiving point (Transmitting Receiving Point, TRP), or another appropriate term in the art. Provided that the same technical effects are achieved, the base station is not limited to any specific technical term. It should be noted that in the embodiments of this application, only the base station in the NR system is used as an example, although the specific type of the base station is not limited.

In the embodiments of this application, for one multicast service (for example, one TMGI service), a network-side device can configure two legs for UE to perform transmission. The two legs include a PTP leg (PTP leg) and a PTM leg (PTM leg).

For the PTM leg, the network-side device scrambles a physical downlink control channel (physical downlink control channel, PDCCH) using a common RNTI (for example, a G-RNTI), all UEs in a group monitor the scheduling of the G-RNTI and receive subsequent scheduling data, and data transmitted in one PTM leg transmission can be received by multiple UEs, that is, PTM transmits data to multiple UEs simultaneously, thus achieving higher transmission efficiency. However, in PTM, it is necessary to comprehensively consider coverage of all UEs, thus PTM transmission parameters need to be applicable to all UEs. For example, omnidirectional antennas are used to provide coverage for UEs with poor link quality. Therefore, the PTM may result in poor performance for individual UEs with poor link quality.

For the PTP leg, the network-side device scrambles the PDCCH by using a cell-radio network temporary identifier (cell-radio network temporary identifier, C-RNTI) specific for UE, and only this UE can detect scheduling of the C-RNTI and receive subsequent scheduling data of the C-RNTI. Data transmitted in one PTP leg transmission can be received by only one UE, indicating that the PTP leg serves as a dedicated transmission leg for an individual UE. Therefore, the network-side device can adjust transmission parameters based on link quality of the UE. For example, a directional or special rectangular antenna is used, and transmission parameters are adjusted based on the link quality of the UE, resulting in an improved transmission efficiency for each individual UE. However, when data needs to be transmitted to multiple UEs, multiple transmission resources are required, which can lead to lower transmission efficiency.

The following describes in detail a logical channel configuration method provided in the embodiments of this application through specific embodiments and application scenarios thereof with reference to the accompanying drawings.

As shown in FIG. 2, an embodiment of this application provides a logical channel configuration method. The method is performed by UE. The method includes the following step 201.

Step 201: UE obtains at least one piece of logical channel configuration information corresponding to a first TMGI.

One piece of logical channel configuration information in the foregoing at least one piece of logical channel configuration information indicates any one of the following configurations:
a first configuration: PTM LCID and/or PTM RLC bearer configuration; and
a second configuration: PTP LCID and/or PTP RLC bearer configuration.

It should be noted that in this embodiment of this application, the foregoing one piece of logical channel configuration information refers to any one of the at least one piece of logical channel configuration information. In a case that the at least one piece of logical channel configuration information is provided in plurality, the logical channel configuration information in the at least one piece of logical channel configuration information may be the same or different. This can be determined depending on an actual use requirement and is not limited in this embodiment of this application.

In this embodiment of this application, the UE can obtain the at least one piece of logical channel configuration information corresponding to the first TMGI, and then the UE can receive a first TMGI service according to the at least one piece of logical channel configuration information, so that the transmission efficiency of multicast service of the UE can be ensured.

In this embodiment of this application, the foregoing first TMGI may be a TMGI of interest to the UE, for example, a TMGI from which the UE is to receive data.

The foregoing first TMGI includes N MRBs, where one MRB in the N MRBs corresponds to one or two pieces of logical channel configuration information in the at least one piece of logical channel configuration information, and N is a positive integer.

One of the two pieces of logical channel configuration information can indicate the first configuration (PTM LCID and/or PTM RLC bearer configuration), and the other can indicate the second configuration (PTP LCID and/or PTP RLC bearer configuration).

In this embodiment of this application, configuration information of one logical channel may include TMGI information and MRB information corresponding to the logical channel, so that the UE can determine an MRB corresponding to each piece of logical channel configuration information in the foregoing at least one piece of logical channel configuration information.

Optionally, in this embodiment of this application, N may be any possible value such as 2, 4, 8, or 16, and may be specifically determined depending on an actual use requirement. This is not limited in this embodiment of this application.

It should be noted that in the case that one MRB corresponds to two pieces of logical channel configuration information in the foregoing at least one piece of logical channel configuration information, the at least one piece of logical channel configuration information is provided in plurality.

In addition, in the case that one MRB corresponds to the foregoing two pieces of logical channel configuration information, this MRB correspondingly has a PTM leg (PTM leg) and a PTP leg (PTP leg).

In this embodiment of this application, any one of the foregoing at least one piece of logical channel configuration information can be implemented in the following four cases (which are case 1, case 2, case 3, and case 4 respectively). The following describes the logical channel configuration information involved in this embodiment of this application by taking one piece of logical channel configuration information as an example.

Implementation of the other pieces of logical channel configuration information in the foregoing at least one piece of logical channel configuration information is similar to implementation of a first piece of logical channel configuration information described below. To avoid repetition, details are not described in this embodiment of this application again.

Case 1: In a case that one piece of logical channel configuration information indicates PTM LCID, this PTM LCID is all LCIDs within a predefined value range of PTM LCID.

For the foregoing case 1, the value range of PTM LCID can be predefined (specified by the standard/protocol), so that UE can determine, according to the predefined value range of PTM LCID, that the PTM LCID is all LCIDs within this value range.

Optionally, in this embodiment of this application, it can be predefined that one TMGI service has at most M MRBs, M being a positive integer (for example, any possible value such as 2, 4, 8, or 16); and PTM LCIDs corresponding to these M MRBs can be predefined, for example, [35, 35+M-1] or [46-M+1, 46], so that a value for one of the foregoing PTM LCIDs may be all values in [46-M+1, 46].

It can be understood that in the foregoing case 1, the PTM LCID range remains the same for different TMGIs, and different TMGIs can be distinguished by G-RNTIs.

For the foregoing case 1, UE can establish M sets of protocol stack entities for a first TMGI service (a service of interest to UE). Each set includes at least a radio link control (radio link control, RLC) entity and a packet data convergence protocol (packet data convergence protocol, PDCP) entity. When UE receives scheduling of a G-RNTI corresponding to the foregoing first TMGI, the UE can determine the first TMGI based on the G-RNTI, then determine a corresponding RLC entity and PDCP entity from this set of protocol stack entities based on LCIDs carried in a subheader (subheader) of a medium access control (medium access control, MAC) protocol data unit (protocol data unit, PDU) scheduled by the G-RNTI, receive and process the service, and deliver the processed service to a higher layer.

In this embodiment of this application, for case 1, because the PTM LCID is predefined, a network-side device is not required to assign additional signaling to the PTM LCID, so that signaling overheads of the network-side device can be reduced.

Case 2: In a case that one piece of logical channel configuration information indicates PTM LCID, this PTM LCID may be a target quantity of LCIDs indicated by a network-side device within a predefined value range of PTM LCID.

The target quantity may be indicated by first signaling, and the first signaling may be first common signaling or first dedicated radio resource control (radio resource control, RRC) signaling.

In the foregoing case 2, the network-side device can indicate, by using the first signaling, to UE a quantity of PTM LCIDs of one logical channel corresponding to one MRB, so that the UE can determine PTM LCIDs from the predefined value range of PTM LCID.

Optionally, in this embodiment of this application, the UE can determine, according to the foregoing target quantity in a predefined value-taking method of PTM LCID, the PTM LCIDs from the predefined value range of PTM LCID.

Optionally, the foregoing predefined value-taking method of PTM LCID may be a method of taking values from the predefined value range of PTM LCID in a forward or reverse manner. This may be specifically determined depending on an actual use requirement and is not limited in this embodiment of this application.

For example, assuming that the predefined value range of PTM LCID is [35, 46] and that the target quantity is 2, in the case that the predefined value-taking method of PTM LCID may be a method of taking values from the predefined value range of PTM LCID in a forward manner, the PTM LCID may be 35 and 36, and in the case that the predefined value-taking method of PTM LCID may be a method of taking values from the predefined value range of PTM LCID in a reverse manner, the PTM LCID may be 45 and 46. In this way, when the UE receives the foregoing MRB 1, two sets of receiving protocol stacks can be established, that is, the receiving entity established by the UE includes at least two sets of RLC+PDCP receiving entities; and under scheduling of the G-RNTI, the UE can transmit received data indicating that the PTM LCID is equal to 35 to a first set of RLC+PDCP receiving entities for processing, and transmit received data indicating that the LCID is equal to 36 to a second set of RLC+PDCP receiving entities for processing.

Optionally, in this embodiment of this application, the foregoing first common signaling may be a system information block (system information block, SIB) mode or a multicast control channel (multicast control channel, MCCH) mode. In this way, all interested UEs can receive this first common signaling, so that the foregoing target quantity can be received, and thus the UE can obtain one piece of logical channel configuration information.

In this embodiment of this application, after the UE enters a connected state, the network-side device can have the foregoing target quantity carried in first dedicated RRC signaling to transmit the target quantity to the UE, so that the UE can obtain one piece of logical channel configuration information. For this first dedicated RRC signaling, if multiple UEs need to obtain the one piece of logical channel configuration information, the network-side device can transmit this first dedicated signaling once to each of the multiple UEs.

Case 3: In a case that one piece of logical channel configuration information indicates PTM LCID, this PTM LCID is an LCID indicated by a network-side device using second signaling.

The foregoing second signaling may be second common signaling or second dedicated RRC signaling.

For the case 3, the network-side device can indicate the PTM LCID to the UE by directly using the foregoing second signaling. For example, this second signaling may include the PTM LCID.

Optionally, in this embodiment of this application, the foregoing second common signaling may be an SIB mode or a MCCH mode, so that the network-side device can have the PTM LCID carried in second common signaling to transmit the PTM LCID to the UE, so that the UE can obtain one piece of logical channel configuration information.

In this embodiment of this application, after the UE enters the connected state, the network-side device can have the PTM LCID carried in the second dedicated RRC signaling to transmit the PTM LCID to the UE, so that the UE can obtain one piece of logical channel configuration information.

For example, in this embodiment of this application, assuming that PTM LCIDs corresponding to an MRB 2 are 37 and 38, the network-side device can have PTM LCID = 37 and PTM LCID = 38 carried in the second signaling to transmit the PTM LCIDs to the UE, so that the UE can obtain logical channel configuration information corresponding to the MRB 2.

Optionally, in this embodiment of this application, for the foregoing case 1, case 2, and case 3, the network-side device can transmit receiving entity configuration information to UE by using one piece of receiving entity configuration information (for example, first receiving entity configuration information in this embodiment of this application), so that the UE can establish corresponding data-receiving entities according to the receiving entity configuration information and the foregoing one piece of logical channel configuration information.

In this embodiment of this application, for the foregoing case 1, case 2, and case 3, the logical channel configuration method provided in this embodiment of this application may further include the following step 202 and step 203.

Step 202: A network-side device transmits first receiving entity configuration information to UE.

Step 203: The UE receives the first receiving entity configuration information transmitted by the network-side device.

The first receiving entity configuration information may include at least one of the following: PTM RLC bearer configuration (may also be referred to as PTM RLC parameters) and PDCP configuration (may also be referred to as PDCP parameters).

In this embodiment of this application, the network-side device can transmit the foregoing first receiving entity configuration information to the UE. After the UE receives the first receiving entity configuration information, the UE can establish corresponding data-receiving entities according to the first receiving entity configuration information and the foregoing one piece of logical channel configuration information. In this way, when corresponding data is received, the corresponding data can be transmitted to this data-receiving entity.

It should be noted that in this embodiment of this application, in a case that the foregoing one piece of logical channel configuration information includes PTM RLC bearer configuration, the foregoing first receiving entity configuration information may include no PTM RLC bearer configuration.

Optionally, in this embodiment of this application, the foregoing PTM RLC bearer configuration may include a PTM RLC mode (for example, an unacknowledged mode (unacknowledged mode, UM)), a PTM RLC sequence number (sequence number, SN), and a timer length. The PDCP configuration may include a PDCP SN and a timer length.

Certainly, in actual implementation, the PTM RLC bearer configuration and the PDCP configuration may further include any other possible configurations (parameters). This may be specifically determined depending on an actual use requirement and is not limited in this embodiment of this application.

Case 4: In a case that one piece of logical channel configuration information indicates PTP LCID, this PTP LCID is indicated by a network-side device using third dedicated RRC signaling.

For the case 4, the network-side device can indicate the PTP LCID to the UE by using the foregoing third dedicated RRC signaling.

In this embodiment of this application, the foregoing third signaling may include (or carry) the PTP LCID, and information of a TMGI and an MRB (for example, an MRB ID), so that a PTP LCID corresponding to this MRB can be indicated to the UE.

Optionally, in this embodiment of this application, if one MRB corresponds to two pieces of logical channel configuration information, in a case that the third dedicated RRC signaling includes no PTP LCID, the PTP LCID is the same as a PTM LCID.

It can be understood that the foregoing PTP LCID may be a PTM LCID indicated by one of the foregoing two pieces of logical channel configuration information or a PTP LCID indicated by the other of the foregoing two pieces of logical channel configuration information. In this way, when the foregoing third dedicated RRC signaling includes no PTP LCID (for example, including only a TMGI and an MRB ID), the UE can associate the PTP LCID with the TMGI and the MRB ID, thereby determining the PTM LCID.

In other words, the network-side device can implicitly indicate to the UE that the PTP LCID is the same as the PTM LCID in a manner of having no PTP LCID carried in the third dedicated RRC signaling.

Optionally, in this embodiment of this application, in a case that one MRB corresponds to two pieces of logical channel configuration information, if the PTP LCID may be equal to the PTM LCID, the network-side device can directly indicate the PTP LCID by using the third dedicated RRC signaling or implicitly indicate that the PTP LCID is the same as the PTM LCID; and if the PTP LCID is unequal to the PTM LCID, the network-side device can indicate the PTP LCID by using the third dedicated RRC signaling.

Optionally, in this embodiment of this application, for the foregoing case 4, the network-side device can transmit receiving entity configuration information to the UE by using one piece of receiving entity configuration information (for example, second receiving entity configuration information in this embodiment of this application), so that the UE can establish corresponding data-receiving entities according to the receiving entity configuration information and the foregoing one piece of logical channel configuration information.

In this embodiment of this application, for the foregoing case 4, the logical channel configuration method provided in this embodiment of this application may further include the following step 204 and step 205.

Step 204: The network-side device transmits second receiving entity configuration information to the UE.

Step 205: The UE receives the second receiving entity configuration information transmitted by the network-side device.

The second receiving entity configuration information may include at least one of the following: PTP RLC bearer configuration and PDCP configuration.

In this embodiment of this application, the network-side device can transmit the foregoing second receiving entity configuration information to the UE. After the UE receives the second receiving entity configuration information, the UE can establish corresponding data-receiving entities according to the second receiving entity configuration information and the foregoing one piece of logical channel configuration information. In this way, when corresponding data is received, the corresponding data can be transmitted to this data-receiving entity.

It should be noted that in this embodiment of this application, in a case that the foregoing one piece of logical channel configuration information includes PTP RLC bearer configuration, the foregoing first receiving entity configuration information may include no PTP RLC bearer configuration.

Optionally, in this embodiment of this application, the foregoing PTP RLC bearer configuration may include a PTP RLC mode, a PTP RLC SN, and a timer length. The foregoing PDCP configuration may include a PDCP SN and a timer length.

Certainly, in actual implementation, the PTP RLC bearer configuration and the PDCP configuration may further include any other possible configurations (parameters). This may be specifically determined depending on an actual use requirement and is not limited in this embodiment of this application.

In this embodiment of this application, UE can obtain logical channel configuration information of TMGIs. Therefore, when the UE is interested in one TMGI, the UE can obtain the logical channel configuration information of this TMGI, such as a first configuration (PTM LCID and/or PTM RLC bearer configuration) and/or a second configuration (PTP LCID and/or PTP RLC bearer configuration). In this way, the UE can receive TMGI services according to the logical channel configuration information, so that the collaborative transmission efficiency between multicast and unicast services of the UE can be improved, thereby improving the transmission efficiency of the multicast service of the UE while ensuring system efficiency.

Optionally, due to multiple manners of using LCIDs for multicast services, conventional 64 LCIDs may be insufficient to meet the use requirements of multicast services. Therefore, the network-side device can configure a corresponding LCID for the UE according to whether the UE supports extended-LCID capability information. Based on this, the logical channel configuration method provided in this embodiment of this application may further include the following step 206 and step 207.

Step 206: After the UE enters a connected state, the UE transmits logical channel extension capability information to the network-side device.

Step 207: The network-side device receives the logical channel extension capability information transmitted by the UE.

The logical channel extension capability information may be used to indicate at least one of the following:
whether the UE supports extended LCID (extended LCID, eLCID);
that the UE supports extended LCID with a first bit quantity; and
that the UE supports extended LCID with a second bit quantity.

In this embodiment of this application, after the UE enters the connected state, the UE transmits the foregoing logical channel extension capability information to the network-side device. As a result, after the network-side device receives the logical channel extension capability information, the network-side device can configure a logical channel (for example, a PTM LCID and/or a PTP LCID) for the UE according to the logical channel extension capability of the UE.

Optionally, in this embodiment of this application, the first bit quantity may be smaller than the second bit quantity. For example, the first bit quantity may be 1 bit, and the second bit quantity may be 2 bits.

Optionally, in this embodiment of this application, in the case that the UE does not support extended LCID, the UE may not transmit the logical channel extension capability information to the network-side device. In other words, in the case that the UE does not support extended LCID, the foregoing step 206 and step 207 may not be performed, so that resource overheads can be reduced.

Optionally, in this embodiment of this application, if the network-side device has not received, within a predetermined time window, extended-LCID capability information reported by the UE, the network-side device determines that the UE does not support the extended LCID.

Optionally, in this embodiment of this application, whether the UE supports the extended LCID means that the PTM LCID and the PTP LCID may be within different ranges.

Case 1: In the case that the UE supports extended LCID, the PTM LCID is within a range of unextended LCIDs or a range of extended LCIDs, and the PTP LCID is within a range of unextended LCIDs or a range of extended LCIDs.

Case 2: In the case that the UE does not support extended LCID, the PTM LCID is within a range of unextended LCIDs or a range of extended LCIDs, and the PTP LCID is within a range of unextended LCIDs.

It should be noted that in this embodiment of this application, in the case that the UE does not support extended LCID, if the PTM LCID is within the range of extended LCIDs, then even if the UE parses out the PTM LCID from a piece of data, the PTM LCID is an unrecognized LCID field for the UE. Therefore, the UE is unable to process the data and thus can discard the data.

Optionally, in this embodiment of this application, that the UE transmits the foregoing logical channel extension capability information to the network-side device may be predefined or may be indicated by the network-side device. This may be specifically determined depending on an actual use requirement and is not limited in this embodiment of this application.

In this embodiment of this application, in a case that the UE transmits the foregoing logical channel extension capability information to the network-side device as predefined, if the UE is interested in a multicast service (for example, the foregoing first TMGI) received after the UE enters the connected state, the UE reports the foregoing logical channel extension capability information to the network-side device after entering the connected state and completing security activation, so that the network-side device can quickly determine a PTM configuration and/or a PTP configuration for this multicast service.

Optionally, in a case that the UE transmits the foregoing logical channel extension capability information to the network-side device as indicated by the network-side device, before the foregoing step 206, the logical channel configuration method provided in this embodiment of this application may further include the following step 208 and step 209.

Step 208: The network-side device transmits third signaling to the UE.

Step 209: The UE receives the third signaling transmitted by the network-side device.

The third signaling may be used to indicate that the UE is to report extended-LCID capability information.

In this embodiment of this application, before the UE transmits the foregoing logical channel extension capability information to the network-side device, the network-side device can transmit the third signaling to the UE, thereby indicating that the UE is to report the extended-LCID capability information.

Optionally, in this embodiment of this application, the third signaling may be common signaling or dedicated RRC signaling. This may be specifically determined depending on an actual use requirement and is not limited in this embodiment of this application.

In this embodiment of this application, in a case that the third signaling is common signaling, the network-side device can simultaneously indicate the third signaling and signaling notifying that the UE is required to enter the connected state for reception of the multicast service (for example, the foregoing first TMGI). In a case that the third signaling is dedicated RRC signaling, after the UE reports the TMGI of interest, the network-side device can use dedicated RRC signaling to indicate that the UE is to report the extended-LCID capability information.

Optionally, in this embodiment of this application, after the foregoing step 201 (the UE obtains the foregoing at least one piece of logical channel configuration information), the logical channel configuration method provided in this embodiment of this application may further include the following step 210 to step 213, or step 210 to step 212 and step 214.

Step 210: The UE establishes a data-receiving entity of the foregoing first TMGI according to the foregoing at least one piece of logical channel configuration information.

In this embodiment of this application, after the UE obtains the at least one piece of logical channel configuration information corresponding to the first TMGI, the UE can establish the data-receiving entity of the first TMGI according to the at least one piece of logical channel configuration information.

In this embodiment of this application, one MRB in the first TMGI corresponds to one PDCP entity. In a case that the MRB corresponds to a PTM LCID indicated by the logical channel configuration information, the PTM LCID corresponds to one PTM RLC entity. In a case that the MRB corresponds to a PTP LCID indicated by the logical channel configuration information, the PTP LCID corresponds to one PTP RLC entity.

In this embodiment of this application, in a case that one MRB corresponds to two pieces of logical channel configuration information, a PTM LCID corresponds to the MRB (for example, a PTM leg LCID is bound to an MRB ID), and a PTP LCID also corresponds to the MRB (for example, a PTP leg LCID is bound to an MRB ID), so that the UE can establish two legs of one split (split) for the MRB, and data of the two legs can be transmitted to a common PDCP entity corresponding to the MRB.

Step 211: The UE receives target scheduling data.

Step 212: The UE determines an LCID in the target scheduling data.

In this embodiment of this application, the UE can receive scheduling data from a G-RNTI, parse out a PTM LCID from a MAC PDU subheader, and transmit the scheduling data to a corresponding data-receiving entity. The UE can also receive scheduling data from a C-RNTI, parse out an LCID from a MAC PDU subheader, then determine whether the LCID is an LCID for unicast service or a PTP LCID, and transmit the scheduling data to a corresponding data-receiving entity.

In this embodiment of this application, after the UE receives the target scheduling data, the UE can determine the LCID in the target scheduling data to perform different operations on the target scheduling data.

Step 213: In a case that the target scheduling data is scheduling data obtained by monitoring a G-RNTI corresponding to the first TMGI or the target scheduling data is scheduling data obtained by monitoring a C-RNTI of the UE, and that the LCID in the target scheduling data is an LCID indicated by the logical channel configuration information, the UE transmits the target scheduling data to the data-receiving entity of the first TMGI for processing.

In this embodiment of this application, in the case that the target scheduling data is the scheduling data obtained by monitoring the G-RNTI corresponding to the first TMGI, the UE can determine a corresponding PTM RLC entity and PDCP entity based on the LCID in the target scheduling data so as to transmit the target scheduling data to the PTM RLC entity and PDCP entity in the first TMGI for processing (for example, reordering, duplicate detection, and other operations).

Correspondingly, in the case that the target scheduling data is the scheduling data obtained by monitoring the C-RNTI of the UE and that the LCID in the target scheduling data is the LCID indicated by the logical channel configuration information, the UE can determine a corresponding PTP RLC entity and PDCP entity based on the LCID in the target scheduling data so as to transmit the target scheduling data to the PTP RLC entity and PDCP entity in the first TMGI for processing (for example, reordering, duplicate detection, and other operations).

Step 214: In a case that the LCID in the target scheduling data is not an LCID supported by the UE, the UE discards the target scheduling data.

In this embodiment of this application, after the UE receives the target scheduling data, if the target scheduling data is not the LCID supported by the UE, for example, the UE does not support the extended LCID, but the LCID in the target scheduling data is an LCID within the range of extended LCIDs, the UE can determine that the LCID in the target scheduling data is not the LCID supported by the UE, in other words, the LCID in the target scheduling data is an unrecognized LCID field for the UE. Therefore, the UE can discard the target scheduling data, that is, the UE ignores the target scheduling data.

As shown in FIG. 3, an embodiment of this application provides a logical channel configuration method. The method is performed by a network-side device. The method includes the following step 301.

Step 301: A network-side device transmits to UE at least one piece of logical channel configuration information corresponding to a first TMGI.

One piece of logical channel configuration information in the foregoing at least one piece of logical channel configuration information indicates any one of the following configurations:
a first configuration: PTM LCID and/or PTM RLC bearer configuration; and
a second configuration: PTP LCID and/or PTP RLC bearer configuration.

In this embodiment of this application, the network-side device can transmit to the UE the foregoing at least one piece of logical channel configuration information corresponding to the first TMGI. Therefore, after the UE receives the at least one piece of logical channel configuration information, the UE can establish a corresponding data-receiving entity according to the at least one piece of logical channel configuration information, so that normal transmission of TMGI services can be ensured.

The first TMGI includes N MRBs, where one MRB corresponds to one or two pieces of logical channel configuration information in the foregoing at least one piece of logical channel configuration information, and N is a positive integer.

One of the two pieces of logical channel configuration information indicates the first configuration, and the other indicates the second configuration.

Optionally, in this embodiment of this application, in a case that one piece of logical channel configuration information indicates PTM LCID, the PTM LCID may be a target quantity of LCIDs indicated by the network-side device within a predefined value range of PTM LCID.

The foregoing target quantity may be indicated by first signaling, and the first signaling may be first common signaling or first dedicated RRC signaling.

In a case that one piece of logical channel configuration information indicates PTM LCID, the PTM LCID is an LCID indicated by the network-side device using second signaling.

The foregoing second signaling may be second common signaling or second dedicated RRC signaling.

In a case that one piece of logical channel configuration information indicates PTP LCID, the PTP LCID may be indicated by the network-side device using third dedicated RRC signaling.

Optionally, in this embodiment of this application, if one MRB corresponds to two pieces of logical channel configuration information, in a case that the third dedicated RRC signaling includes no PTP LCID, the PTP LCID is the same as the PTM LCID.

In this embodiment of this application, the network-side device can transmit logical channel configuration information of TMGIs to the UE. Therefore, when the UE reports its interest in one TMGI, the network-side device can transmit to the UE logical channel configuration information of this TMGI, such as a first configuration (PTM LCID and/or PTM RLC bearer configuration) and/or a second configuration (PTP LCID and/or PTP RLC bearer configuration). In this way, the UE can receive TMGI services according to the logical channel configuration information, so that the collaborative transmission efficiency between multicast and unicast services can be improved, thereby improving the transmission efficiency of the multicast service while ensuring system efficiency.

The following illustrates the logical channel configuration method provided in the embodiments of this application with reference to specific embodiments.

### Embodiment 1: PTM configuration manner

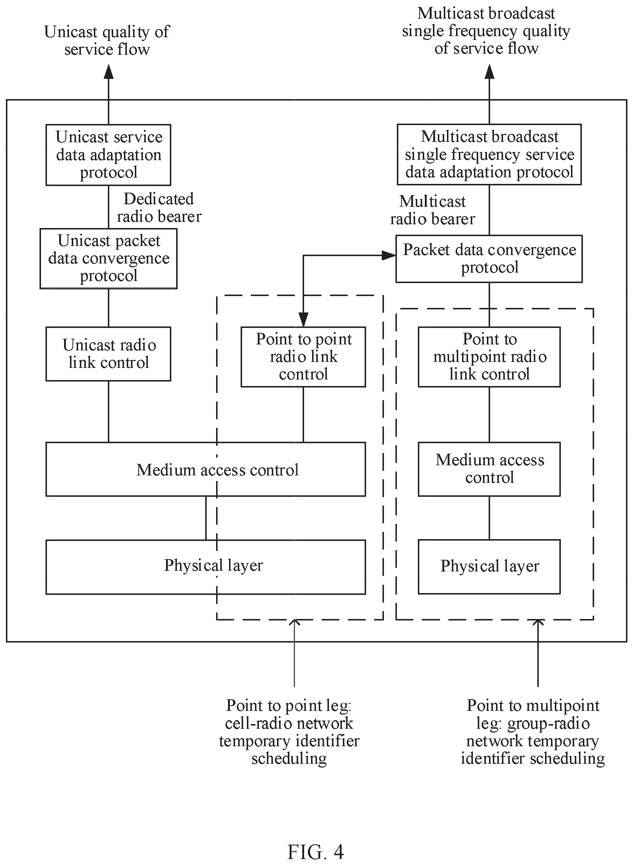

As shown in FIG. 4 which is a schematic diagram of a protocol stack architecture of UE according to an embodiment of this application, the schematic diagram of the protocol stack architecture includes only a dedicated radio bearer (dedicated radio bearer, DRB) and an MRB, and illustrates a protocol stack association between the two. In an actual application, the UE may have multiple unicast DRBs, or multiple MRBs corresponding to one TMGI/G-RNTI, or even multiple TMGIs/G-RNTIs, where each TMGI/G-RNTI corresponds to one or more MRBs.

In multiple MRBs, the network-side device can configure all MRBs with PTP legs, configure all MRBs with PTM legs, configure some of MRBs with PTP legs and others with PTM legs, or configure some of MRBs with PTP legs and PTM legs and others with PTP legs or the PTM legs. This may be specifically determined depending on an actual use requirement and is not limited in this embodiment of this application.

The following illustrates how LCIDs are configured for PTM legs of MRBs, that is, how PTM LCIDs corresponding to the MRBs are configured.

Manner 1: An LCID of a PTM leg is specified in the standard (that is, an LCID of a PTM leg is predefined) in the following method.

It is specified in the standard that one TMGI has at most M MRBs, and the value of M may be 2, 4, 8, 16, or any other possible value. LCID values corresponding to the M MRBs are written in the standardized "Values of LCID for DL-SCH" table. For example, a current NR has reserved LCID values as shown in Table 1.

**Table 1**

| | |
|---|---|
| 35-46 | Reserved (reserved) |

It can be specified in the standard that LCID values are within a range of [35, 35+M-1] or [46-M+1, 46], where the LCID values are PTM LCID values corresponding to one MRB of one TMGI service. In addition, there is a one-to-one correspondence between MRBs and logical channels (logical channel, LCH). In other words, the MRBs may also be radio bearer (RB) ID values within the value range.

When the UE receives the scheduling data, the UE can establish M sets of protocol stack entities (that is, data-receiving entities) for each TMGI service of interest to the UE. Each set of protocol stack entities includes at least a PTM RLC entity and a PDCP entity. When the UE receives scheduling of one G-RNTI, the UE can determine a TMGI service based on the G-RNTI, then determine a corresponding PTM RLC entity and PDCP entity according to an LCID value carried in a MAC PDU subheader scheduled by the G-RNTI, receive and process the service, and deliver the processed service to a higher layer.

In the first manner, each TMGI services corresponds to the same logical channel (that is, PTM LCID) value range, and different TMGI services can be distinguished by G-RNTIs corresponding to TMGIs.

For manner 1, the network-side device does not need to allocate the PTM LCID, thereby avoiding wasting signaling overheads, but this manner lacks flexibility. If one TMGI service does not use all the M logical channels but needs only N logical channels (N < M), data-receiving entities corresponding to unused logical channels are wasted.

Manner 2: The network-side device dynamically configures the number of logical channels and their values using the following method:
The network-side device configures the UE with the number of logical channels (that is, the number of PTM LCIDs) corresponding to one MRB by using common signaling or dedicated signaling. Optionally, the number of logical channels configured may be within a specified range, for example, [1, M], so as to help the UE to evaluate whether its capability is sufficient to receive data of the MRB.

The foregoing manner of using the common signaling is a manner in which the network-side device uses an SIB or an MCCH. All interested UEs can receive the common signaling and configuration information carried in the common signaling at the same time.

The foregoing manner of using the dedicated signaling means that after the UE enters the connected state, the network-side device transmits, by using dedicated (dedicated) RRC signaling (signaling), configuration information corresponding to the PTM LCID (which can also be logical channel information of PTM) to the UE. If multiple UEs need to obtain the configuration information corresponding to the PTM LCID, the network-side device needs to transmit such configuration information once to each of the multiple UEs individually.

In this embodiment of this application, the PTM logical channel information transmitted by the network-side device to the UE in a signaling configuration manner may include one or more pieces of the following information:
(1) The number of PTM LCIDs corresponding to one MRB. For example, MRB1 may have two logical channels, and a default logical channel identifier value-taking method is used. For example, two LCID values, which are (35, 36) taken from the front or (45, 46) taken from the rear of a remaining LCID space (for example, [35, 46]), or are taken in other manners, are used as the two logical channel identifier values corresponding to MRB 1. When the UE receives the MRB 1 service, two sets of data-receiving protocol stacks can be established. The data-receiving protocol stack includes at least two sets of RLC entities + PDCP entities; and under scheduling of the G-RNTI of a TMGI corresponding to the MRB 1, if the UE receives data indicating that the PTM LCID is equal to 35, the UE can transmit such data to a first set of RLC entities + PDCP entities for processing. If the UE receives data indicating that the PTM LCID is equal to 36, the UE transmits such data to a second set of RLC entities + PDCP entities for processing. Parameters of the RLC entity and PDCP entity are in a default form (a predefined form), such as an RLC UM mode, a default RLC SN and timer length, and a default PDCP SN and timer length.
(2) PTM LCIDs corresponding to one MRB. For example, MRB 1 may have two logical channels, the LCIDs are 37 and 38 respectively, and the LCID 37 and LCID 38 correspond to different RLC parameters and PDCP parameters.

There is a one-to-one correspondence between MRBs and LCHs, that is, the MRB may alternatively be an RB ID value taken from the configuration value range or an RB ID value configured independently. The network-side device can explicitly indicate to the UE a binding relationship (which may also be referred to as an association relationship) between the RB ID and the LCID.

In manner 2, value ranges of logical channels may be the same or different for different TMGI services, and different TMGI services can be distinguished by G-RNTIs corresponding to TMGIs.

For the foregoing manner 2, although the network-side device needs to consume some signaling overheads for assignment of the PTM LCID, a high flexibility is achieved. The receiving UE only needs to establish a data-receiving entity group corresponding to the number of TMGI services actually configured, without wasting the established data-receiving entities.

Optionally, if the TMGI service requires the UE to enter the connected state for reception, such as a multicast service with high quality of service (quality of service, QoS) requirements, the network-side device can configure the corresponding PTM LCID for the UE based on the capability of the UE. For example, if all UEs in the group support eLCID capability, the network-side device can configure the PTM LCID corresponding to the MRB in the TMGI into the range of extended LCIDs. However, if at least one UE in the group does not support eLCID capability, the network-side device can only select the PTM LCID corresponding to the MRB in the TMGI from the existing supported LCID range (for example, 35-46).

The extended LCIDs, which are 1-byte extended LCIDs or 2-byte extended LCIDs, may correspond to different value ranges. The network-side device can determine, based on the capability of the UE and other considerations, PTM LCID values in which range to be configured for the UE, as shown in Table 2 and Table 3:

**Table 2**

| Codepoint (codepoint) | Index (index) | LCID value |
|---|---|---|
| [0, (2¹⁶-1)] | [320, (2¹⁶+319)] | LCID |

**Table 3**

| Codepoint (codepoint) | Index (index) | LCID value |
|---|---|---|
| [0, 244] | [64, 308] | LCID |

Because the PTM LCID value needs to be received uniformly by multiple UEs, different UEs receive the same PTM LCID value corresponding to the same MRB for the same TMGI service in any configuration manner.

Optionally, in this embodiment of this application, due to the use of G-RNTI scheduling for the PTM leg and C-RNTI scheduling for unicast (unicast) services, LCIDs can be reused between the PTM leg and the unicast service. The LCIDs may have duplicate values, and UE can differentiate them by using different RNTIs.

### Embodiment 2: PTP configuration manner

One MRB of a TMGI service may be configured with only PTM leg, or only PTP leg, or both PTP leg and PTM leg. Multiple MRBs of one TMGI service may be of the same configuration type or different configuration types. For example, in one TMGI service, the MRB with high reliability requirement is configured with both PTP leg and PTM leg, and the MRB with low reliability requirement is configured with only PTM leg.

The PTP leg is generally configured by dedicated RRC signaling, and a PTP LCID corresponding to the PTP leg is available in two manners.

Manner 1: The PTP LCID is the same as an LCID of the PTM leg by default (that is, the PTP LCID is the same as a PTM LCID by default). When configuring the LCID of the PTP leg (that is, the PTP LCID), the network-side device can indicate that the PTP leg is the PTP leg corresponding to which MRB of which TMGI service, for example, the network-side device can have a TMGI and an MRB ID carried in signaling, and the UE can determine a corresponding PTM LCID based on the TMGI and MRB ID. Certainly, the network-side device can also implicitly or explicitly indicate to the UE that the LCID of the PTP leg is the same as the LCID of the PTM leg. For example, the LCID of the PTP leg is not carried, meaning that the LCID of the PTM leg is reused.

Manner 2: The LCID configured for the PTP leg is displayed. Because the PTP leg is UE-specific (specific), the network-side device can configure it for each UE individually. For example, if UE supports eLCID, the network-side device can configure the UE with LCIDs within a 1-byte extension range or LCIDs within a 2-byte extension range. In addition, because a logical channel of the PTP leg and a logical channel of unicast are multiplexed for transmission (that is, the LCID of PTP leg is multiplexed with a unicast LCID), the LCID of PTP leg cannot be duplicated with the unicast LCID. Optionally, the LCID of the PTP leg and the LCID of the PTM leg corresponding to one MRB may be different, so that multicast services and unicast services can be scheduled synchronously.

For example, only a range of 35-46 is left for unicast DL-SCH LCIDs. If LCIDs of PTM legs corresponding to TMGI 1 are within a range of 35-42 (that is, a total of 8 logical channels are used for the PTM legs corresponding to TMGI 1), LCIDs of PTM legs corresponding to TMGI 2 may also be within a range of 35-42 (that is, a total of 8 logical channels are used for the PTM legs corresponding to TMGI 2). These two services are distinguished by scheduling of different G-RNTIs. However, if TMGI 1 corresponds to 8 PTP legs and LCIDs of the PTP legs corresponding to TMGI 1 are also within a range of 35-42, in a case that TMGI 2 corresponds to 8 PTP legs, LCIDs of the PTP legs corresponding to TMGI 2 can only be within an unused range of 43-46 or enable a space of eLCID. In other words, if PTP legs corresponding to different TMGI services are configured for the same UE, LCIDs of the PTP legs need to be strictly different from DRB LCIDs. Because both the PTP leg and the unicast service are scheduled by C-RNTIs, these services need to be distinguished by different LCIDs.

It should be noted that for a PTP leg of the same TMGI service, an MRB ID configured can be used to determine a corresponding common PDCP entity and a PTM leg corresponding to the PTP leg. For example, an MRB ID of TMGI 1 is equal to 35, an LCID of a PTM leg is configured as being equal to 35, an LCID of a PTP leg is configured as being equal to 41 or 100 (a value of an extended LCID with 1 bit), and the two legs are both associated with one MRB ID being equal to 35 so as to form an MRB of a split.

Optionally, in Embodiment 2, the foregoing two manners can be used simultaneously. For example, in a case that the LCID of the PTP leg may be equal to the LCID of the PTM leg, the LCID of the PTP leg can be configured in manner 1 or manner 2, and in a case that the LCID of the PTP leg is unequal to the LCID of the PTM leg, the LCID of the PTP leg can be explicitly configured for the UE in manner 2.

### Embodiment 3: Reporting and use of extended-LCID capability

In a case that a broadcast (broadcast) or multicast (multicast) service needs to be received by idle (Idle) UEs or inactive (Inactive) UEs, since capability information of these UEs may not be stored in a current cell, the network-side device may not know whether each UE supports the eLCID capability, including support for a 1-byte (bit) eLCID or a 2-byte eLCID, so that the network-side device and the UE can perform the following schemes:
1. The network-side device configures the LCID of the PTM leg corresponding to the TMGI within the existing range of 6 bits (bit), with only values 35-46 available for the 6 bits. This ensures that all UEs can receive the PTM leg normally, regardless of their capabilities.
2. The network-side device configures the LCID of the PTM leg corresponding to the TMGI within a range of extended 1-byte or 2-byte eLCIDs. As a result, only UEs supporting the extended LCID can receive the PTM leg normally, whereas other UEs that do not support the extended LCID can discard data packets when encountering unrecognized LCID fields.
3. For services with low QoS requirements, the network-side device can indicate through configuration information whether the UE needs to report eLCID support capability after entering the connected state, for example, including reporting support for the eLCID or support for the 1-byte eLCID and/or the 2-byte eLCID. The configuration information may be conveyed through common signaling or dedicated signaling. After receiving the configuration information, the UE can report its capability accordingly or refrain from reporting if it does not support the eLCID.
4. The network-side device configures the LCID of the PTM leg corresponding to the TMGI within the existing range of 6 bits, where only 35-46 are available for the 6 bits. This can ensure that all UEs can receive the PTM leg normally, regardless of their capabilities. The network-side device can collect the capability information of the UE in the connected state and configure the PTP leg for the UE according to capability information of the UE. The LCID of the PTP leg can be configured within a capability range of the UE.

When a multicast service needs to be received by UE in the connected state, the UE in the connected state can report eLCID capability by default, or the network-side device can instruct the UE to report the eLCID capability as soon as possible through configuration (for example, reporting whether the UE supports the eLCID or supports the 1-byte eLCID and/or the 2-byte eLCID). The network-side device and the UE can implement the following schemes:
1. Predefinition: in a case a multicast service of interest to the UE is the multicast service received after the UE enters the connected state, the UE reports its own eLCID support capability as soon as possible after the UE enters the connected state and completes security activation, helping the network-side device to determine the configuration of the PTM leg and/or PTP leg.
2. The network-side device instructs the UE to report the eLCID support capability by using common signaling or dedicated signaling. For example, the network-side device can include an instruction for the UE to report the eLCID support capability in signaling that instructs the UE to enter the connected state for receiving a multicast service (for example, a multicast service of interest to the UE); or after the UE reports information about the interested multicast service to the network-side device, the network-side device uses dedicated RRC signaling to instruct the UE to report the eLCID support capability.
3. In the case the UE does not support the eLCID, the UE does not report eLCID capability information, thus reducing some overheads.
4. If the network-side device does not receive the reported eLCID support capability reported from the UE within a specified time window, the network-side device considers that the UE does not support the eLCID.
5. After receiving the eLCID capability information of each UE, the network-side device can determine the configuration of the LCID of the PTM leg and/or the LCID of the PTP leg. In a case that all UEs support the eLCID, the network-side device can configure the LCID of the PTM leg within the eLCID range supported by all UEs. For the configuration of the LCID of the PTP leg, the network-side device can configure the LCID of the PTP leg within their respective supported range according to different capabilities of the UEs. The LCID of the PTP leg may be the same as or different from the LCID of the PTM leg, and the LCID of the PTP leg can be associated with the LCID of the PTM leg through the MRB ID.
6. When the UE is interested in multiple TMGI services, in a case that the eLCID capability supported by the UE is not sufficient to support the configuration of PTP leg for each TMGI service to ensure the reception effect, the network-side device can adopt a manner of configuring only the PTP leg within the capability range for the UE. The PTP leg can be determined based on an indication order of interested services reported by the UE or an explicit priority of TMGI services.

### Embodiment 4: UE behavior

After the UE obtains an LCID of a PTM leg and/or an LCID of a PTP leg corresponding to an MRB of an interested TMGI service and corresponding configurations, the UE can establish corresponding data-receiving entities according to these configurations. One MRB ID corresponds to one PDCP entity, an LCID of one PTM leg corresponds to one configured PTM RLC entity, and an LCID of one PTP leg corresponds to one configured PTP RLC entity. By binding the LCID of the PTM leg and the LCID of the PTP leg to the same MRB ID, the UE can establish two legs of one split for one MRB, and data of the two legs can be transmitted to a common PDCP entity for reordering, duplicate detection, and other operations.

The UE receives scheduling data from a G-RNTI, parses out an LCID from a MAC PDU subheader, and determines a corresponding PTM leg entity for subsequent reception processing.

The UE receives scheduling data from a C-RNTI, parses out an LCID from the MAC PDU subheader, and determines, according to the LCID, a corresponding unicast receiving entity or receiving entities of different PTP legs of different TMGIs for subsequent reception processing.

It should be noted that the logical channel configuration method provided in the embodiments of this application may be performed by a logical channel configuration apparatus or a control module for performing the logical channel configuration method in the logical channel configuration apparatus. The embodiments of this application use the logical channel configuration apparatus performing the logical channel configuration method as an example to describe the logical channel configuration apparatus provided in the embodiments of this application.

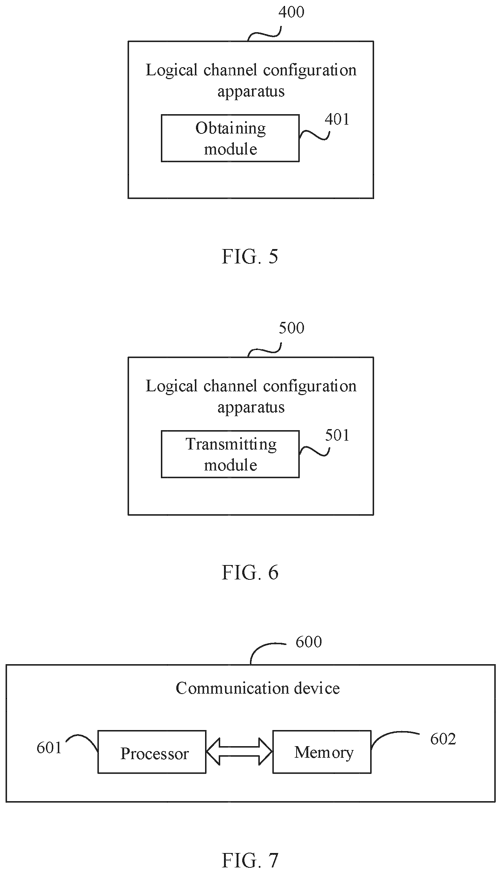

As shown in FIG. 5, an embodiment of this application, which is not in accordance with the appended claims and given as an example useful for the understanding of the invention, provides a logical channel configuration apparatus 400. The logical channel configuration apparatus 400 includes an obtaining module 401. The obtaining module 401 is configured to obtain at least one piece of logical channel configuration information corresponding to a first TMGI, where one piece of logical channel configuration information indicates any one of the following configurations: a first configuration: PTM LCID and/or PTM RLC bearer configuration; and a second configuration: PTP LCID and/or PTP RLC bearer configuration.

Optionally, the first TMGI includes N MRBs, where one MRB corresponds to one or two pieces of logical channel configuration information in the at least one piece of logical channel configuration information, and N is a positive integer. One of the two pieces of logical channel configuration information indicates the first configuration, and the other indicates the second configuration.

Optionally, one piece of logical channel configuration information indicates PTM LCID, where the PTM LCID is all LCIDs within a predefined value range of PTM LCID.

Optionally, one piece of logical channel configuration information indicates PTM LCID, where the PTM LCID is a target quantity of LCIDs indicated by a network-side device within a predefined value range of PTM LCID, the target quantity is indicated by first signaling, and the first signaling is first common signaling or first dedicated RRC signaling.

Optionally, one piece of logical channel configuration information indicates PTM LCID, where the PTM LCID is an LCID indicated by a network-side device using second signaling, and the second signaling is second common signaling or second dedicated RRC signaling.

Optionally, the logical channel configuration apparatus may further include a receiving module, where the receiving module is configured to receive first receiving entity configuration information transmitted by a network-side device, and the first receiving entity configuration information includes at least one of the following: PTM RLC bearer configuration and PDCP configuration.

Optionally, one piece of logical channel configuration information indicates PTP LCID, where the PTP LCID is indicated by a network-side device using third dedicated RRC signaling.

Optionally, one MRB corresponds to two pieces of logical channel configuration information; and in a case that the third dedicated RRC signaling includes no PTP LCID, the PTP LCID is the same as the PTM LCID.

Optionally, the logical channel configuration apparatus may further include a receiving module, where the receiving module is configured to receive second receiving entity configuration information transmitted by the network-side device, and the second receiving entity configuration information includes at least one of the following: PTP RLC bearer configuration and PDCP configuration.

Optionally, the logical channel configuration apparatus may further include a transmitting module, where the transmitting module is configured to: after UE enters a connected state, transmit logical channel extension capability information to the network-side device. The logical channel extension capability information is used to indicate at least one of the following:
whether the UE supports extended LCID;
that the UE supports extended LCID with a first bit quantity; and
that the UE supports extended LCID with a second bit quantity.

Optionally, in the case that the UE supports extended LCID, the PTM LCID is within a range of unextended LCIDs or a range of extended LCIDs, and the PTP LCID is within a range of unextended LCIDs or a range of extended LCIDs; or
in the case that the UE does not support extended LCID, the PTM LCID is within a range of unextended LCIDs or a range of extended LCIDs, and the PTP LCID is within a range of unextended LCIDs.

Optionally, the logical channel configuration apparatus may further include a receiving module, where the receiving module is configured to: before transmitting, by the transmitting module, the logical channel extension capability information to the network-side device, receive third signaling transmitted by the network-side device, and the third signaling is used to indicate that the UE is to report extended-LCID capability information.

Optionally, the logical channel configuration apparatus may further include an establishing module, a receiving module, and a transmitting module, where the establishing module is configured to: after the obtaining module obtains the at least one piece of logical channel configuration information, establish a data-receiving entity of the first TMGI according to the at least one piece of logical channel configuration information; the receiving module is configured to receive target scheduling data; and the transmitting module is configured to: in a case that the target scheduling data is scheduling data obtained by monitoring a group-radio network temporary identifier G-RNTI corresponding to the first TMGI or the target scheduling data is scheduling data obtained by monitoring a cell-radio network temporary identifier C-RNTI of the UE, and that an LCID in the target scheduling data is an LCID indicated by the logical channel configuration information, transmit the target scheduling data to the data-receiving entity of the first TMGI for processing.

Optionally, the UE does not support the extended LCID. The logical channel configuration apparatus may further include an execution module, where the execution module is configured for the UE to: after the receiving module receives the target scheduling data, in a case that the LCID in the target scheduling data is not an LCID supported by the UE, discard the target scheduling data.

In the logical channel configuration apparatus provided in this embodiment of this application, because logical channel configuration information of TMGIs can be obtained, when the UE is interested in one TMGI, the UE can obtain logical channel configuration information of this TMGI, such as a first configuration (PTM LCID and/or PTM RLC bearer configuration) and/or a second configuration (PTP LCID and/or PTP RLC bearer configuration). In this way, TMGI services can be received according to the logical channel configuration information, so that the collaborative transmission efficiency of multicast services and unicast services can be improved, thereby improving the transmission efficiency of the multicast service while ensuring system efficiency.

As shown in FIG. 6, an embodiment of this application, which is not in accordance with the appended claims and given as an example useful for the understanding of the invention, provides a logical channel configuration apparatus 500. The logical channel configuration apparatus 500 includes a transmitting module 501, the transmitting module 501 being configured to transmit to UE at least one piece of logical channel configuration information corresponding to a first TMGI, where one piece of logical channel configuration information indicates any one of the following configurations: a first configuration: PTM LCID and/or PTM RLC bearer configuration; and a second configuration: PTP LCID and/or PTP RLC bearer configuration.

Optionally, the first TMGI includes N MRBs, where one MRB corresponds to one or two pieces of logical channel configuration information in the at least one piece of logical channel configuration information, and N is a positive integer. One of the two pieces of logical channel configuration information indicates the first configuration, and the other indicates the second configuration.

Optionally, one piece of logical channel configuration information indicates PTM LCID, where the PTM LCID is a target quantity of LCIDs indicated by a network-side device within a predefined value range of PTM LCID, the target quantity is indicated by first signaling, and the first signaling is first common signaling or first dedicated RRC signaling.

Optionally, one piece of logical channel configuration information indicates PTM LCID, where the PTM LCID is an LCID indicated by the network-side device using second signaling, and the second signaling is second common signaling or second dedicated RRC signaling.

Optionally, the transmitting module is further configured to transmit first receiving entity configuration information to UE, where the first receiving entity configuration information includes PTM RLC bearer configuration and PDCP configuration.

Optionally, one piece of logical channel configuration information indicates PTP LCID, where the PTP LCID is indicated by the network-side device using third dedicated RRC signaling.

Optionally, one MRB corresponds to two pieces of logical channel configuration information; and in a case that the third dedicated RRC signaling includes no PTP LCID, the PTP LCID is the same as the PTM LCID.

Optionally, the transmitting module is further configured to transmit second receiving entity configuration information to the UE, where the second receiving entity configuration information includes at least one of the following: PTP RLC bearer configuration and PDCP configuration.

Optionally, the logical channel configuration apparatus further includes a receiving module, where the receiving module is configured to: before the transmitting module transmits the logical channel configuration information to the UE, receive logical channel extension capability information transmitted by the UE. The logical channel extension capability information is used to indicate at least one of the following:
whether the UE supports extended LCID;
that the UE supports extended LCID with a first bit quantity; and
that the UE supports extended LCID with a second bit quantity.

Optionally, in the case that the UE supports extended LCID, the PTM LCID is within a range of unextended LCIDs or a range of extended LCIDs, and the PTP LCID is within a range of unextended LCIDs or a range of extended LCIDs; or
in the case that the UE does not support extended LCID, the PTM LCID is within a range of unextended LCIDs or a range of extended LCIDs, and the PTP LCID is within a range of unextended LCIDs.

Optionally, the transmitting module is further configured to transmit third signaling to the UE before the receiving module receives the logical channel extension capability information transmitted by the UE, where the third signaling is used to indicate that the UE is to report extended-LCID capability information.

In the logical channel configuration apparatus provided in this embodiment of this application, because logical channel configuration information of TMGIs can be transmitted to the UE, when the UE reports its interest in one TMGI, logical channel configuration information of this TMGI can be transmitted to the UE, such as a first configuration (PTM LCID and/or PTM RLC bearer configuration) and/or a second configuration (PTP LCID and/or PTP RLC bearer configuration). In this way, the UE can receive TMGI services according to the logical channel configuration information, so that the collaborative transmission efficiency of multicast services and unicast services can be improved, thereby improving the transmission efficiency of the multicast service while ensuring system efficiency.

The logical channel configuration apparatus in this embodiment of this application may be an apparatus, or may be a component, an integrated circuit, or a chip in UE. The apparatus may be a mobile UE or a non-mobile UE. For example, the mobile UE may include but is not limited to the types of the UE 11 as listed above, and the non-mobile UE may be a server, a network attached storage (Network Attached Storage, NAS), a personal computer (personal computer, PC), a television (television, TV), an automated teller machine, a self-service machine or the like, which are not specifically limited in this embodiment of this application.

The logical channel configuration apparatus in this embodiment of this application may be an apparatus having an operating system. The operating system may be an Android (Android) operating system, may be an iOS operating system, or may be other possible operating systems. This is not specifically limited in this embodiment of this application.

The logical channel configuration apparatus provided in this embodiment of this application can implement the processes implemented in the foregoing method embodiments, with the same technical effects achieved. To avoid repetition, details are not described herein again.

Optionally, as shown in FIG. 7, an embodiment of this application further provides a communication device 600 including a processor 601, a memory 602, and a program or instructions stored in the memory 602 and capable of running on the processor 601. For example, when the communication device 600 is UE, the program or instructions are executed by the processor 601 to implement the processes of the foregoing logical channel configuration method embodiments, with same technical effects achieved. In a case that the communication device 600 is a network-side device, when the program or instructions are executed by the processor 601, the processes of the foregoing logical channel configuration apparatus and method embodiments are implemented, with the same technical effects achieved. To avoid repetition, details are not described herein again.

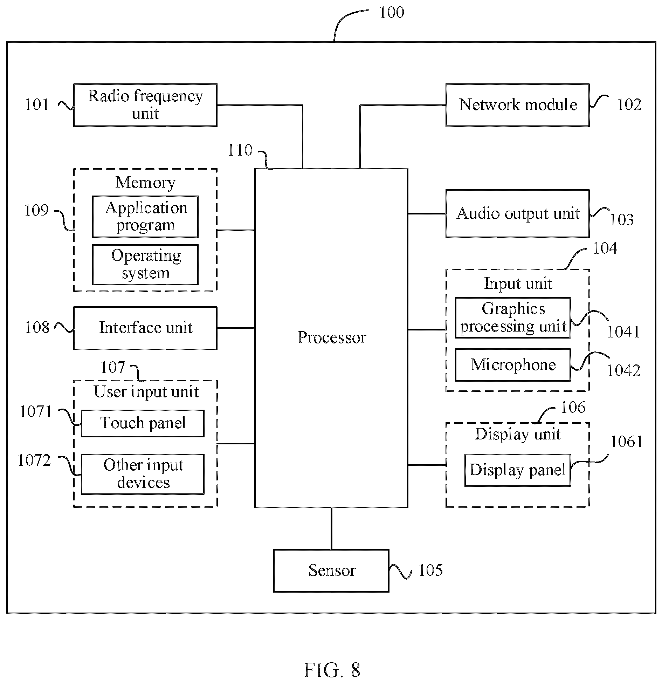

FIG. 8 is a schematic diagram of a hardware structure of UE for implementing an embodiment of this application.

The UE 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

Persons skilled in the art may understand that the UE 100 may further include a power supply (such as a battery) for supplying power to the components. The power supply may be logically connected to the processor 110 through a power management system. In this way, functions such as charge management, discharge management, and power consumption management are implemented by using the power management system. The structure of the UE shown in FIG. 8 does not constitute any limitation on the UE. The UE may include more or fewer components than shown in the figure, or a combination of some components, or the components disposed differently. Details are not described herein again.

It should be understood that, in an embodiment of this application, the input unit 104 may include a graphics processing unit (Graphics Processing Unit, GPU) 1041 and a microphone 1042. The graphics processing unit 1041 processes image data of a static picture or a video that is obtained by an image capture apparatus (for example, a camera) in an image capture mode or a video capture mode. The display unit 106 may include a display panel 1061. The display panel 1061 may be configured in a form of a liquid crystal display, an organic light-emitting diode, or the like. The user input unit 107 includes a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function button (for example, a volume control button or an on/off button), a trackball, a mouse, and a joystick. Details are not described herein.

In an embodiment of this application, the radio frequency unit 101 transmits downlink data received from a network-side device to the processor 110 for processing, and in addition, transmits uplink data to the network-side device. Generally, the radio frequency unit 101 includes but is not limited to an antenna, at least one amplifier, a transceiver, a coupler, a low noise amplifier, a duplexer, and the like.

The memory 109 may be configured to store software programs or instructions and various data. The memory 109 may mainly include a program or instruction storage area and a data storage area. The program or instruction storage area may store an operating system, application programs or instructions (such as an audio play function and an image play function) required by at least one function, and the like. In addition, the memory 109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The memory 109 may be, for example, at least one magnetic disk storage device, a flash memory, or another non-volatile solid-state storage device.

The processor 110 may include one or more processing units. Optionally, an application processor and a modem processor may be integrated in the processor 110. The application processor mainly processes an operating system, a user interface, an application program, instructions, or the like. The modem processor, such as a baseband processor, mainly processes wireless communication. It can be understood that the modem processor may alternatively be not integrated in the processor 110.

The processor 110 is configured to obtain at least one piece of logical channel configuration information corresponding to a first TMGI, where one piece of logical channel configuration information indicates any one of the following configurations: a first configuration: PTM LCID and/or PTM RLC bearer configuration; and a second configuration: PTP LCID and/or PTP RLC bearer configuration.

Optionally, the first TMGI includes N MRBs, where one MRB corresponds to one or two pieces of logical channel configuration information in the at least one piece of logical channel configuration information, and N is a positive integer. One of the two pieces of logical channel configuration information indicates the first configuration, and the other indicates the second configuration.

Optionally, one piece of logical channel configuration information indicates PTM LCID, where the PTM LCID is all LCIDs within a predefined value range of PTM LCID.

Optionally, one piece of logical channel configuration information indicates PTM LCID, where the PTM LCID is a target quantity of LCIDs indicated by a network-side device within a predefined value range of PTM LCID, the target quantity is indicated by first signaling, and the first signaling is first common signaling or first dedicated RRC signaling.

Optionally, one piece of logical channel configuration information indicates PTM LCID, where the PTM LCID is an LCID indicated by the network-side device using second signaling, and the second signaling is second common signaling or second dedicated RRC signaling.

Optionally, the logical channel configuration apparatus may further include a receiving module, where the receiving module is configured to receive first receiving entity configuration information transmitted by the network-side device, and the first receiving entity configuration information includes at least one of the following: PTM RLC bearer configuration and PDCP configuration.

Optionally, one piece of logical channel configuration information indicates PTP LCID, where the PTP LCID is indicated by the network-side device using third dedicated RRC signaling.

Optionally, one MRB corresponds to two pieces of logical channel configuration information; and in a case that the third dedicated RRC signaling includes no PTP LCID, the PTP LCID is the same as the PTM LCID.

Optionally, the radio frequency unit is configured to receive second receiving entity configuration information transmitted by the network-side device, where the second receiving entity configuration information includes at least one of the following: PTP RLC bearer configuration and PDCP configuration.

Optionally, the radio frequency unit may be further configured to: after UE enters a connected state, transmit logical channel extension capability information to a network-side device, where the logical channel extension capability information is used to indicate at least one of the following:
whether the UE supports extended LCID;
that the UE supports extended LCID with a first bit quantity; and
that the UE supports extended LCID with a second bit quantity.

Optionally, in the case that the UE supports extended LCID, the PTM LCID is within a range of unextended LCIDs or a range of extended LCIDs, and the PTP LCID is within a range of unextended LCIDs or a range of extended LCIDs; or
in the case that the UE does not support extended LCID, the PTM LCID is within a range of unextended LCIDs or a range of extended LCIDs, and the PTP LCID is within a range of unextended LCIDs.

Optionally, the radio frequency unit may be configured to: before transmitting, by the transmitting module, the logical channel extension capability information to the network-side device, receive third signaling transmitted by the network-side device, where the third signaling is used to indicate that the UE is to report extended-LCID capability information.

Optionally, the processor 110 may be further configured to: after obtaining the at least one piece of logical channel configuration information, establish a data-receiving entity of the first TMGI according to the at least one piece of logical channel configuration information. The radio frequency unit 101 may be further configured to receive target scheduling data. The processor 110 may be further configured to: in a case that the target scheduling data is scheduling data obtained by monitoring a group-radio network temporary identifier G-RNTI corresponding to the first TMGI or the target scheduling data is scheduling data obtained by monitoring a cell-radio network temporary identifier C-RNTI of the UE, and that an LCID in the target scheduling data is an LCID indicated by the logical channel configuration information, transmit the target scheduling data to the data-receiving entity of the first TMGI for processing.

Optionally, the UE does not support the extended LCID. The logical channel configuration apparatus may further include an execution module, where the execution module is configured for the UE to: after the receiving module receives the target scheduling data, in a case that the LCID in the target scheduling data is not an LCID supported by the UE, discard the target scheduling data.

In the UE provided in this embodiment of this application, because logical channel configuration information of TMGIs can be obtained, when the UE is interested in one TMGI, the UE can obtain logical channel configuration information of this TMGI, such as a first configuration (PTM LCID and/or PTM RLC bearer configuration) and/or a second configuration (PTP LCID and/or PTP RLC bearer configuration). In this way, TMGI services can be received according to the logical channel configuration information, so that the collaborative transmission efficiency of multicast services and unicast services can be improved, thereby improving the transmission efficiency of the multicast service while ensuring system efficiency.

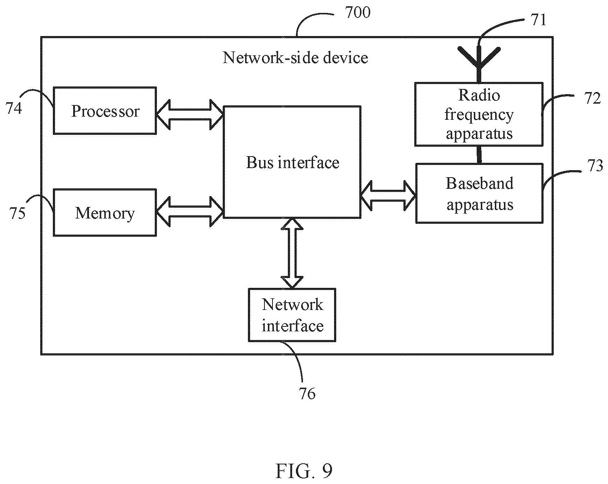

Specifically, an embodiment of this application further provides a network-side device. As shown in FIG. 9, the network-side device 700 includes an antenna 71, a radio frequency apparatus 72, and a baseband apparatus 73. The antenna 71 is connected to the radio frequency apparatus 72. In an uplink direction, the radio frequency apparatus 72 receives information by using the antenna 71 and transmits the received information to the baseband apparatus 73 for processing. In a downlink direction, the baseband apparatus 73 processes to-be-transmitted information, and transmits the information to the radio frequency apparatus 72; and the radio frequency apparatus 72 processes the received information and then transmits the information by using the antenna 71.

The frequency band processing apparatus may be located in the baseband apparatus 73. The method performed by the network-side device in the foregoing embodiments may be implemented by the baseband apparatus 73, and the baseband apparatus 73 includes a processor 74 and a memory 75.

The baseband apparatus 73 may include, for example, at least one baseband board, where a plurality of chips are disposed on the baseband board. As shown in FIG. 9, one of the chips is, for example, the processor 74, and connected to the memory 75, to invoke the program in the memory 75 to perform the operations of the network-side device shown in the foregoing method embodiments.

The baseband apparatus 73 may further include a network interface 76 configured to exchange information with the radio frequency apparatus 72, where the interface is, for example, a common public radio interface (common public radio interface, CPRI for short).

Specifically, the network-side device in this embodiment of the present invention further includes instructions or a program stored in the memory 75 and capable of running on the processor 74. The processor 74 invokes the instructions or program in the memory 75 to perform the method performed by the modules shown in FIG. 6, with the same technical effects achieved. To avoid repetition, details are not described herein again.

The radio frequency apparatus 72 is configured to transmit to UE at least one piece of logical channel configuration information corresponding to a first TMGI, where one piece of logical channel configuration information indicates any one of the following configurations: a first configuration: PTM LCID and/or PTM RLC bearer configuration; and a second configuration: PTP LCID and/or PTP RLC bearer configuration.

Optionally, the first TMGI includes N MRBs, where one MRB corresponds to one or two pieces of logical channel configuration information in the at least one piece of logical channel configuration information, and N is a positive integer. One of the two pieces of logical channel configuration information indicates the first configuration, and the other indicates the second configuration.

Optionally, one piece of logical channel configuration information indicates PTM LCID, where the PTM LCID is a target quantity of LCIDs indicated by a network-side device within a predefined value range of PTM LCID, the target quantity is indicated by first signaling, and the first signaling is first common signaling or first dedicated RRC signaling.

Optionally, one piece of logical channel configuration information indicates PTM LCID, where the PTM LCID is an LCID indicated by the network-side device using second signaling, and the second signaling is second common signaling or second dedicated RRC signaling.

Optionally, the radio frequency apparatus 72 is further configured to transmit first receiving entity configuration information to the UE, where the first receiving entity configuration information includes PTM RLC bearer configuration and PDCP configuration.

Optionally, one piece of logical channel configuration information indicates PTP LCID, where the PTP LCID is indicated by the network-side device using third dedicated RRC signaling.

Optionally, one MRB corresponds to two pieces of logical channel configuration information; and in a case that the third dedicated RRC signaling includes no PTP LCID, the PTP LCID is the same as the PTM LCID.

Optionally, the radio frequency apparatus 72 is further configured to transmit second receiving entity configuration information to the UE, where the second receiving entity configuration information includes at least one of the following: PTP RLC bearer configuration and PDCP configuration.

Optionally, the radio frequency apparatus 72 is further configured to: before transmitting the logical channel configuration information to the UE, receive logical channel extension capability information transmitted by the UE, where the logical channel extension capability information is used to indicate at least one of the following:
whether the UE supports extended LCID;
that the UE supports extended LCID with a first bit quantity; and
that the UE supports extended LCID with a second bit quantity.

Optionally, in the case that the UE supports extended LCID, the PTM LCID is within a range of unextended LCIDs or a range of extended LCIDs, and the PTP LCID is within a range of unextended LCIDs or a range of extended LCIDs; or
in the case that the UE does not support extended LCID, the PTM LCID is within a range of unextended LCIDs or a range of extended LCIDs, and the PTP LCID is within a range of unextended LCIDs.

Optionally, the radio frequency apparatus 72 is further configured to transmit third signaling to the UE before receiving the logical channel extension capability information transmitted by the UE, where the third signaling is used to indicate that the UE is to report extended-LCID capability information.

In the network-side device provided in this embodiment of this application, because logical channel configuration information of TMGIs can be transmitted to the UE, when the UE reports its interest in one TMGI, logical channel configuration information of this TMGI can be transmitted to the UE, such as a first configuration (PTM LCID and/or PTM RLC bearer configuration) and/or a second configuration (PTP LCID and/or PTP RLC bearer configuration). In this way, the UE can receive TMGI services according to the logical channel configuration information, so that the collaborative transmission efficiency of multicast services and unicast services can be improved, thereby improving the transmission efficiency of the multicast service while ensuring system efficiency.

An embodiment of this application further provides a readable storage medium, where the readable storage medium stores a program or instructions, and when the program or the instructions are executed by a processor, the processes of the foregoing logical channel configuration method embodiments are implemented, with the same technical effects achieved. To avoid repetition, details are not described herein again.

The processor is a processor in the UE in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or instructions of a network-side device to implement the processes of the foregoing logical channel configuration method embodiments, with the same technical effects achieved. To avoid repetition, details are not described herein again.

It should be understood that the chip in the embodiments of this application may also be referred to as a system-level chip, a system chip, a chip system, a system on chip, or the like.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such understanding, the technical solutions of this application essentially or the part thereof that contributes to the prior art may be implemented in a form of a software product. The computer software product is stored in a storage medium (for example, ROM/RAM, a magnetic disk, or an optical disc), and includes several instructions for instructing one UE (which may be a mobile phone, a computer, a server, an air conditioner, a network-side device, or the like) to perform the method described in the embodiments of this application.

Embodiments of this application have been described with reference to the accompanying drawings.

## Claims

1. A logical channel configuration method, wherein the method comprises:
obtaining (201), by user equipment, UE, at least one piece of logical channel configuration information corresponding to a first temporary mobile group identifier, TMGI, wherein
one piece of logical channel configuration information indicates one of the following first and second configurations:
a first configuration: point to multipoint, PTM, logical channel identifier, LCID, and/or PTM radio link control, RLC, bearer configuration; and
a second configuration: point to point, PTP, LCID and/or PTP RLC bearer configuration;
wherein the first TMGI comprises N multicast radio bearers, MRB, one MRB corresponds to one or two pieces of logical channel configuration information in the at least one piece of logical channel configuration information, and N is a positive integer; and
one of the two pieces of logical channel configuration information indicates the first configuration, and the other indicates the second configuration;
**characterized in that**
one piece of logical channel configuration information indicates the PTM LCID; and the PTM LCID is all LCIDs within a predefined value range of PTM LCID; or,
wherein one piece of logical channel configuration information indicates the PTM LCID; and the PTM LCID is an LCID indicated by a network-side device using second signaling, and the second signaling is second common signaling or second dedicated RRC signaling; or,
wherein one piece of logical channel configuration information indicates the PTP LCID; and the PTP LCID is indicated by a network-side device using third dedicated RRC signaling.

2. The method according to claim 1, wherein the method further comprises:
receiving, by the UE, first receiving entity configuration information transmitted by a network-side device, wherein the first receiving entity configuration information comprises at least one of the following: PTM RLC bearer configuration and packet data convergence protocol, PDCP, configuration.

3. The method according to claim 1, wherein in a case where one piece of logical channel configuration information indicates the PTP LCID; and the PTP LCID is indicated by the network-side device using third dedicated RRC signaling, the one MRB corresponds to the two pieces of logical channel configuration information; and
in a case that the third dedicated RRC signaling comprises no PTP LCID, the PTP LCID is the same as the PTM LCID.

4. The method according to claim 1, wherein in a case where one piece of logical channel configuration information indicates the PTP LCID; and the PTP LCID is indicated by the network-side device using third dedicated RRC signaling, the method further comprises:
receiving, by the UE, second receiving entity configuration information transmitted by the network-side device, wherein the second receiving entity configuration information comprises at least one of the following: PTP RLC bearer configuration and PDCP configuration.

5. The method according to claim 1, wherein the method further comprises:
after the UE enters a connected state, transmitting, by the UE, logical channel extension capability information to a network-side device, wherein the logical channel extension capability information is used to indicate at least one of the following:
whether the UE supports extended LCID;
that the UE supports extended LCID with a first bit quantity; and
that the UE supports extended LCID with a second bit quantity.

6. The method according to claim 5, wherein
in the case that the UE supports extended LCID, the PTM LCID is within a range of unextended LCIDs or a range of extended LCIDs, and the PTP LCID is within a range of unextended LCIDs or a range of extended LCIDs; or
in the case that the UE does not support extended LCID, the PTM LCID is within a range of unextended LCIDs or a range of extended LCIDs, and the PTP LCID is within a range of unextended LCIDs.

7. The method according to claim 6, wherein before the transmitting, by the UE, logical channel extension capability information to a network-side device, the method further comprises:
receiving, by the UE, third signaling transmitted by the network-side device, wherein the third signaling is used to indicate that the UE is to report extended-LCID capability information.

8. The method according to claim 1, wherein after the obtaining, by UE, at least one piece of logical channel configuration information, the method further comprises:
establishing, by the UE, a data-receiving entity of the first TMGI according to the at least one piece of logical channel configuration information;
receiving, by the UE, target scheduling data; and
in a case that the target scheduling data is scheduling data obtained by monitoring a group-radio network temporary identifier G-RNTI corresponding to the first TMGI or the target scheduling data is scheduling data obtained by monitoring a cell-radio network temporary identifier C-RNTI of the UE, and that an LCID in the target scheduling data is an LCID indicated by the logical channel configuration information, transmitting, by the UE, the target scheduling data to the data-receiving entity of the first TMGI for processing.

9. The method according to claim 8, wherein the UE supports no extended LCID; and
after the receiving, by the UE, target scheduling data, the method further comprises:
in a case that the LCID in the target scheduling data is not an LCID supported by the UE, discarding, by the UE, the target scheduling data.

10. A logical channel configuration method, wherein the method comprises:
transmitting (301), by a network-side device to user equipment, UE, at least one piece of logical channel configuration information corresponding to a first temporary mobile group identifier, TMGI, wherein
one piece of logical channel configuration information indicates one of the following first and second configurations:
a first configuration: point to multipoint, PTM, logical channel identifier, LCID, and/or PTM radio link control, RLC, bearer configuration; and
a second configuration: point to point, PTP, LCID and/or PTP RLC bearer configuration;
wherein the first TMGI comprises N multicast radio bearers, MRB, one MRB corresponds to one or two pieces of logical channel configuration information in the at least one piece of logical channel configuration information, and N is a positive integer; and
one of the two pieces of logical channel configuration information indicates the first configuration, and the other indicates the second configuration;
**characterized in that** one piece of logical channel configuration information indicates the PTM LCID; and the PTM LCID is all LCIDs within a predefined value range of PTM LCID; or,
wherein one piece of logical channel configuration information indicates the PTM LCID; and the PTM LCID is an LCID indicated by the network-side device using second signaling, and the second signaling is second common signaling or second dedicated RRC signaling;
or,
wherein one piece of logical channel configuration information indicates the PTP LCID; and the PTP LCID is indicated by a network-side device using third dedicated RRC signaling.

11. User equipment, UE, comprising a processor, a memory, and a program or instructions stored in the memory and capable of running on the processor, **characterized in that** when the program or instructions are executed by the processor, the steps of the logical channel configuration method according to any one of claims 1 to 9 are implemented.

12. A network-side device, comprising a processor, a memory, and a program or instructions stored in the memory and capable of running on the processor, **characterized in that** when the program or instructions are executed by the processor, the steps of the logical channel configuration method according to claim 10 are implemented.

13. A readable storage medium, wherein the readable storage medium stores a program or instructions, and when the program or instructions are executed by the processor, the steps of the logical channel configuration method according to any one of claims 1 to 9 or the logical channel configuration method according to claim 10 are implemented.

14. A computer program product, wherein the computer program product is executed by at least one processor to implement the steps of the logical channel configuration method according to any one of claims 1 to 10.

## Patentansprüche

1. Konfigurationsverfahren für logischen Kanal, wobei das Verfahren Folgendes umfasst:
Erlangen (201), durch ein Benutzergerät, UE, von mindestens einem Teil von Konfigurationsinformationen für logischen Kanal, die einer ersten temporären mobilen Gruppenkennung, TMGI, entsprechen, wobei
ein Teil von Konfigurationsinformationen für logischen Kanal eine von der folgenden ersten und zweiten Konfiguration angibt:
eine erste Konfiguration: logische Kanalkennung, LCID, für Punkt-zu-Mehrpunkt, PTM, und/oder Trägerkonfiguration für PTM-Funkverbindungssteuerung, RLC; und
eine zweite Konfiguration: Trägerkonfiguration für Punkt-zu-Punkt, PTP, LCID und/oder PTP-RLC;
wobei die erste TMGI N Multicast-Funkträger, MRB, umfasst, wobei ein MRB einem oder zwei Teilen von Konfigurationsinformationen für logischen Kanal in dem mindestens einen Teil von Konfigurationsinformationen für logischen Kanal entspricht und N eine positive ganze Zahl ist; und
einer der zwei Teile von Konfigurationsinformationen für logischen Kanal die erste Konfiguration angibt und die andere die zweite Konfiguration angibt;
**dadurch gekennzeichnet, dass**
ein Teil von Konfigurationsinformationen für logischen Kanal die PTM-LCID angibt und die PTM-LCID alle LCIDs innerhalb eines vordefinierten Wertebereichs der PTM-LCID sind; oder,
wobei ein Teil von Konfigurationsinformationen für logischen Kanal die PTM-LCID angibt; und die PTM-LCID eine LCID ist, die von einer netzseitigen Vorrichtung unter Verwendung einer zweiten Signalisierung angegeben wird, und die zweite Signalisierung eine zweite gemeinsame Signalisierung oder eine zweite dedizierte RRC-Signalisierung ist; oder,
wobei ein Teil von Konfigurationsinformationen für logischen Kanal die PTP-LCID angibt; und die PTP-LCID von einer netzseitigen Vorrichtung unter Verwendung einer dritten dedizierten RRC-Signalisierung angegeben wird.

2. Verfahren nach Anspruch 1, wobei das Verfahren ferner Folgendes umfasst:
Empfangen, durch das UE, von ersten Empfangsinstanz-Konfigurationsinformationen, die von einer netzseitigen Vorrichtung übertragen werden, wobei die ersten Empfangsinstanz-Konfigurationsinformationen mindestens eines der Folgenden umfassen: Konfiguration des PTM-RLC-Trägers und des Paketdatenkonvergenzprotokolls, PDCP.

3. Verfahren nach Anspruch 1, wobei in einem Fall, in dem ein Teil von Konfigurationsinformationen für logischen Kanal die PTP-LCID angibt und die PTP-LCID von der netzseitigen Vorrichtung unter Verwendung einer dritten dedizierten RRC-Signalisierung angegeben wird, der eine MRB den zwei Teilen von Konfigurationsinformationen für logischen Kanal entspricht; und
wenn die dritte dedizierte RRC-Signalisierung keine PTP-LCID enthält, die PTP-LCID gleich ist wie die PTM-LCID.

4. Verfahren nach Anspruch 1, wobei in einem Fall, in dem ein Teil von Konfigurationsinformationen für logischen Kanal die PTP-LCID angibt; und die PTP-LCID durch die netzseitige Vorrichtung unter Verwendung einer dritten dedizierten RRC-Signalisierung angegeben wird, das Verfahren ferner Folgendes umfasst:
Empfangen von zweiten , die von der netzseitigen Vorrichtung übertragen werden, durch das UE, wobei die zweiten Empfangsinstanz-Konfigurationsinformationen mindestens eines der Folgenden umfassen: PTP-RLC-Trägerkonfiguration und PDCP-Konfiguration.

5. Verfahren nach Anspruch 1, wobei das Verfahren ferner Folgendes umfasst:
nachdem das UE in einen Verbindungszustand eingetreten ist, Übertragen, durch das UE, von Erweiterungsfähigkeitsinformationen für logischen Kanal an eine netzseitige Vorrichtung, wobei die Erweiterungsfähigkeitsinformationen für logischen Kanal verwendet werden, um mindestens eines der Folgenden anzugeben:
ob das UE erweiterte LCID unterstützt;
dass das UE erweiterte LCID mit einer ersten Bitmenge unterstützt; und
dass das UE erweiterte LCID mit einer zweiten Bitmenge unterstützt.

6. Verfahren nach Anspruch 5, wobei
für den Fall, dass das UE eine erweiterte LCID unterstützt, die PTM-LCID innerhalb eines Bereichs von nicht erweiterten LCIDs oder eines Bereichs von erweiterten LCIDs ist und die PTP-LCID innerhalb eines Bereichs von nicht erweiterten LCIDs oder eines Bereichs von erweiterten LCIDs ist; oder
für den Fall, dass das UE keine erweiterte LCID unterstützt, die PTM-LCID innerhalb eines Bereichs von nicht erweiterten LCIDs oder eines Bereichs von erweiterten LCIDs ist und die PTP-LCID innerhalb eines Bereichs von nicht erweiterten LCIDs ist.

7. Verfahren nach Anspruch 6, wobei das Verfahren vor dem Übertragen, durch das UE, von Erweiterungsfähigkeitsinformationen für logischen Kanal an eine netzseitige Vorrichtung durch das UE ferner Folgendes umfasst:
Empfangen, durch das UE, einer dritten Signalisierung, die durch das netzseitige Vorrichtung übertragen wird, wobei die dritte Signalisierung verwendet wird, um anzugeben, dass das UE erweiterte LCID-Fähigkeitsinformationen melden soll.

8. Verfahren nach Anspruch 1, wobei das Verfahren nach Erlangen, durch UE, mindestens eines Teils von Konfigurationsinformationen für logischen Kanal ferner Folgendes umfasst:
Festlegen, durch das UE, einer datenempfangenden Instanz des ersten TMGI gemäß dem mindestens einen Teil von Konfigurationsinformationen für logischen Kanal;
Empfangen, durch das UE, von Zielplanungsdaten; und
in einem Fall, dass die Ziel-Planungsdaten Planungsdaten sind, die durch Überwachen einer temporären Gruppenfunknetzkennung G-RNTI, die dem ersten TMGI entspricht, erlangt werden, oder dass die Ziel-Planungsdaten Planungsdaten sind, die durch Überwachen einer temporären Zellennetzkennung C-RNTI des UE erlangt werden, und dass eine LCID in den Ziel-Planungsdaten eine LCID ist, die durch die Konfigurationsinformationen für logischen Kanal angegeben wird, Übertragen der Ziel-Planungsdaten durch das UE an die datenempfangende Instanz des ersten TMGI zum Verarbeiten.

9. Verfahren nach Anspruch 8, wobei das UE erweiterte LCID nicht unterstützt;
und
nach Empfangen, durch das UE, von Zielplanungsdaten, das Verfahren ferner Folgendes umfasst:
in einem Fall, in dem die LCID in den Zielplanungsdaten keine von dem UE unterstützte LCID ist, Verwerfen der Zielplanungsdaten durch das UE.

10. Konfigurationsverfahren für logischen Kanal, wobei das Verfahren Folgendes umfasst:
Übertragen (301), durch eine netzseitige Vorrichtung an ein Benutzergerät, UE, von mindestens einem Teil von Konfigurationsinformationen für einen logischen Kanal, die einer ersten temporären mobilen Gruppenkennung, TMGI, entsprechen, wobei
ein Teil von Konfigurationsinformationen für logischen Kanal eine von der folgenden ersten und zweiten Konfiguration angibt:
eine erste Konfiguration: logische Kanalkennung, LCID, für Punkt-zu-Mehrpunkt, PTM, und/oder Trägerkonfiguration für PTM-Funkverbindungssteuerung, RLC; und
eine zweite Konfiguration: Trägerkonfiguration für Punkt-zu-Punkt, PTP, LCID und/oder PTP-RLC;
wobei die erste TMGI N Multicast-Funkträger, MRB, umfasst, wobei ein MRB einem oder zwei Teilen von Konfigurationsinformationen für logischen Kanal in dem mindestens einen Teil von Konfigurationsinformationen für logischen Kanal entspricht und N eine positive ganze Zahl ist; und
einer der zwei Teile von Konfigurationsinformationen für logischen Kanal die erste Konfiguration angibt und die andere die zweite Konfiguration angibt;
**dadurch gekennzeichnet, dass** ein Teil von Konfigurationsinformationen für logischen Kanal die PTM-LCID angibt; und die PTM-LCID alle LCIDs innerhalb eines vordefinierten Wertebereichs der PTM-LCID sind; oder
wobei ein Teil von Konfigurationsinformationen für logischen Kanal die PTM-LCID angibt; und die PTM-LCID eine LCID ist, die von der netzseitigen Vorrichtung unter Verwendung einer zweiten Signalisierung angegeben wird, und die zweite Signalisierung eine zweite gemeinsame Signalisierung oder eine zweite dedizierte RRC-Signalisierung ist;
oder
wobei ein Teil von Konfigurationsinformationen für logischen Kanal die PTP-LCID angibt; und die PTP-LCID von einer netzseitigen Vorrichtung unter Verwendung einer dritten dedizierten RRC-Signalisierung angegeben wird.

11. Benutzergerät, UE, umfassend einen Prozessor, einen Speicher und ein Programm oder Anweisungen, das/die in dem Speicher gespeichert ist/sind und auf dem Prozessor ausgeführt werden kann/können, **dadurch gekennzeichnet, dass**, wenn das Programm oder die Anweisungen von dem Prozessor ausgeführt wird/werden, die Schritte des Konfigurationsverfahrens für logischen Kanal nach einem der Ansprüche 1 bis 9 implementiert werden.

12. Netzseitige Vorrichtung, umfassend einen Prozessor, einen Speicher und ein Programm oder Anweisungen, das/die in dem Speicher gespeichert ist/sind und auf dem Prozessor ausgeführt werden kann/können, **dadurch gekennzeichnet, dass**, wenn das Programm oder die Anweisungen von dem Prozessor ausgeführt wird/werden, die Schritte des Konfigurationsverfahrens für logischen Kanal nach Anspruch 10 implementiert werden.

13. Lesbares Speichermedium, wobei das lesbare Speichermedium ein Programm oder Anweisungen speichert, und wenn das Programm oder die Anweisungen durch den Prozessor ausgeführt werden, die Schritte des Konfigurationsverfahrens für logischen Kanal nach einem der Ansprüche 1 bis 9 oder des Konfigurationsverfahrens für logischen Kanal nach Anspruch 10 implementiert werden.

14. Computerprogrammprodukt, wobei das Computerprogrammprodukt von mindestens einem Prozessor ausgeführt wird, um die Schritte des Konfigurationsverfahrens für logischen Kanal nach einem der Ansprüche 1 bis 10 zu implementieren.

## Revendications

1. Procédé de configuration d'un canal logique, dans lequel le procédé comprend :
l'obtention (201), par l'équipement d'utilisateur, UE, d'au moins une information de configuration de canal logique correspondant à un premier identificateur de groupe mobile temporaire, TMGI, dans lequel
une information de configuration de canal logique indique l'une des première et seconde configurations suivantes :
une première configuration : configuration point à multipoint, PTM, identificateur de canal logique, LCID, et/ou configuration de support de contrôle de liaison radio, RLC, PTM ; et
une seconde configuration : configuration point à point, PTP, LCID et/ou support RLC PTP ;
dans lequel le premier TMGI comprend N supports radio de multidiffusion, MRB, un MRB correspondant à une ou deux informations de configuration de canal logique dans l'au moins une information de configuration de canal logique, et N étant un nombre entier positif ; et
l'une des deux informations de configuration du canal logique indique la première configuration, et l'autre indique la seconde configuration ;
**caractérisé en ce que**
une information de configuration de canal logique indique le LCID PTM ; et le LCID PTM correspond à tous les LCID situés dans une plage de valeurs prédéfinie du LCID PTM ; ou,
dans lequel une information de configuration de canal logique indique le LCID PTM ; et le LCID PTM est un LCID indiqué par un dispositif côté réseau à l'aide d'une deuxième signalisation, et la deuxième signalisation est une deuxième signalisation commune ou une deuxième signalisation RRC dédiée ; ou,
dans lequel une information de configuration de canal logique indique le LCID PTP ; et le LCID PTP est indiqué par un dispositif côté réseau à l'aide d'une troisième signalisation RRC dédiée.

2. Procédé selon la revendication 1, dans lequel le procédé comprend en outre :
la réception, par l'UE, de premières informations de configuration d'entité de réception transmises par un dispositif côté réseau, dans lequel les premières informations de configuration d'entité de réception comprennent au moins l'une des configurations suivantes : une configuration de support RLC PTM et une configuration de protocole de convergence des données par paquets, PDCP.

3. Procédé selon la revendication 1, dans lequel, dans un cas où une information de configuration de canal logique indique le LCID PTP et où le LCID PTP est indiqué par le dispositif côté réseau à l'aide d'une troisième signalisation RRC dédiée, l'unique MRB correspond aux deux informations de configuration de canal logique ; et
dans un cas où la troisième signalisation RRC dédiée ne comporte pas de LCID PTP, le LCID PTP est le même que le LCID PTM.

4. Procédé selon la revendication 1, dans lequel, dans un cas où une information de configuration de canal logique indique le LCID PTP et où le LCID PTP est indiqué par le dispositif côté réseau à l'aide d'une troisième signalisation RRC dédiée, le procédé comprend en outre :
la réception, par l'UE, de secondes informations de configuration d'entité de réception transmises par un dispositif côté réseau, dans lequel les secondes informations de configuration d'entité de réception comprennent au moins l'une des configurations suivantes : configuration de support RLC PTP et configuration de PDCP.

5. Procédé selon la revendication 1, dans lequel le procédé comprend en outre :
après l'entrée de l'UE dans un état connecté, la transmission, par l'UE, d'informations de capacité d'extension de canal logique à un dispositif côté réseau, dans lequel les informations de capacité d'extension de canal logique sont utilisées pour indiquer au moins l'un des éléments suivants :
si l'UE prend en charge le LCID étendu ;
que l'UE prend en charge le LCID étendu avec une première quantité de bits ; et
que l'UE prend en charge le LCID étendu avec une seconde quantité de bits.

6. Procédé selon la revendication 5, dans lequel
dans le cas où l'UE prend en charge le LCID étendu, le LCID PTM se situe dans une plage de LCID non étendus ou dans une plage de LCID étendus, et le LCID PTP se situe dans une plage de LCID non étendus ou dans une plage de LCID étendus ; ou
dans le cas où l'UE ne prend pas en charge le LCID étendu, le LCID PTM se situe dans une plage de LCID non étendus ou dans une plage de LCID étendus, et le LCID PTP se situe dans une plage de LCID non étendus.

7. Procédé selon la revendication 6, dans lequel, avant la transmission, par l'UE, d'informations de capacité d'extension de canal logique à un dispositif côté réseau, le procédé comprend en outre :
la réception, par l'UE, d'une troisième signalisation transmise par le dispositif côté réseau, dans lequel la troisième signalisation est utilisée pour indiquer que l'UE doit signaler des informations de capacité LCID étendu.

8. Procédé selon la revendication 1, dans lequel, après l'obtention, par l'UE, d'au moins une information de configuration de canal logique, le procédé comprend en outre :
l'établissement, par l'UE, d'une entité de réception de données du premier TMGI en fonction de l'au moins une information de configuration de canal logique ;
la réception, par l'UE, de données de programmation cibles ; et
dans un cas où les données de programmation cibles sont des données de programmation obtenues par la surveillance d'un identificateur temporaire de réseau radio de groupe G-RNTI correspondant au premier TMGI ou les données de programmation cibles sont des données de programmation obtenues par la surveillance d'un identificateur temporaire de réseau radio cellulaire C-RNTI de l'UE, et où un LCID dans les données de programmation cibles est un LCID indiqué par les informations de configuration de canal logique, la transmission, par l'UE, des données de programmation cibles à l'entité de réception de données du premier TMGI pour le traitement.

9. Procédé selon la revendication 8, dans lequel l'UE ne prend pas en charge de LCID étendu ; et
après la réception, par l'UE, des données de programmation cibles, le procédé comprend en outre :
dans un cas où le LCID dans les données de programmation cibles n'est pas un LCID pris en charge par l'UE, le rejet, par l'UE, des données de programmation cibles.

10. Procédé de configuration d'un canal logique, dans lequel le procédé comprend :
la transmission (301), par un dispositif côté réseau à l'équipement d'utilisateur, UE, d'au moins une information de configuration de canal logique correspondant à un premier identificateur de groupe mobile temporaire, TMGI, dans lequel
une information de configuration de canal logique indique l'une des première et seconde configurations suivantes :
une première configuration : configuration point à multipoint, PTM, identificateur de canal logique, LCID, et/ou configuration de support de contrôle de liaison radio (RLC) PTM ; et
une seconde configuration : configuration point à point, PTP, LCID et/ou support RLC PTP ;
dans lequel le premier TMGI comprend N supports radio de multidiffusion, MRB, un MRB correspondant à une ou deux informations de configuration de canal logique dans l'au moins une information de configuration de canal logique, et N étant un nombre entier positif ; et
l'une des deux informations de configuration du canal logique indique la première configuration, et l'autre indique la seconde configuration ;
**caractérisé en ce qu'**une information de configuration de canal logique indique le LCID PTM ; et le LCID PTM correspond à tous les LCID situés dans une plage de valeurs prédéfinie du LCID PTM ; ou,
dans lequel une information de configuration de canal logique indique le LCID PTM ; et le LCID PTM est un LCID indiqué par le dispositif côté réseau à l'aide d'une deuxième signalisation, et la deuxième signalisation est une deuxième signalisation commune ou une deuxième signalisation RRC dédiée ;
ou,
dans lequel une information de configuration de canal logique indique le LCID PTP ; et le LCID PTP est indiqué par un dispositif côté réseau à l'aide d'une troisième signalisation RRC dédiée.

11. Équipement d'utilisateur, UE, comprenant un processeur, une mémoire, et un programme ou des instructions stockés dans la mémoire et pouvant être exécutés sur le processeur, **caractérisé en ce que** lorsque le programme ou les instructions sont exécutés par le processeur, les étapes du procédé de configuration de canal logique selon l'une quelconque des revendications 1 à 9 sont mises en œuvre.

12. Dispositif côté réseau, comprenant un processeur, une mémoire, et un programme ou des instructions stockés dans la mémoire et pouvant être exécutés sur le processeur, **caractérisé en ce que** lorsque le programme ou les instructions sont exécutés par le processeur, les étapes du procédé de configuration de canal logique selon la revendication 10 sont mises en œuvre.

13. Support de stockage lisible, dans lequel le support de stockage lisible stocke un programme ou des instructions, et lorsque le programme ou les instructions sont exécutés par le processeur, les étapes du procédé de configuration de canal logique selon l'une quelconque des revendications 1 à 9 ou du procédé de configuration de canal logique selon la revendication 10 sont mises en œuvre.

14. Produit programme informatique, dans lequel le produit programme informatique est exécuté par au moins un processeur pour mettre en œuvre les étapes du procédé de configuration de canal logique selon l'une quelconque des revendications 1 à 10.
